(19) Europäisches Patentamt
European Patent Office
Office européen des brevets

(11) EP 1 841 117 A1

(12) EUROPEAN PATENT APPLICATION

(43) Date of publication:
03.10.2007 Bulletin 2007/40

(51) Int Cl.:
*H04L 1/18* (2006.01)

(21) Application number: 06006872.3

(22) Date of filing: 31.03.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: MATSUSHITA ELECTRIC INDUSTRIAL CO., LTD
Kadoma-shi, Osaka 571-8501 (JP)

(72) Inventor: Dimou, Konstantinos, Dr.
63225 Langen (DE)

(74) Representative: Grünecker, Kinkeldey, Stockmair & Schwanhäusser
Anwaltssozietät
Maximilianstrasse 58
80538 München (DE)

# (54) Acknowledgment message arbitration received by different access points and corresponding to the same packet

(57) The invention relates to a method for retransmitting data packets in a network. Further, the invention relates to an adapted mobile terminal and control entity for performing the method, respectively. To minimize the signaling overhead and transmission delays, the invention provides mechanisms that optimize the retransmission of data packets and manage acknowledgement messages.

Fig. 1

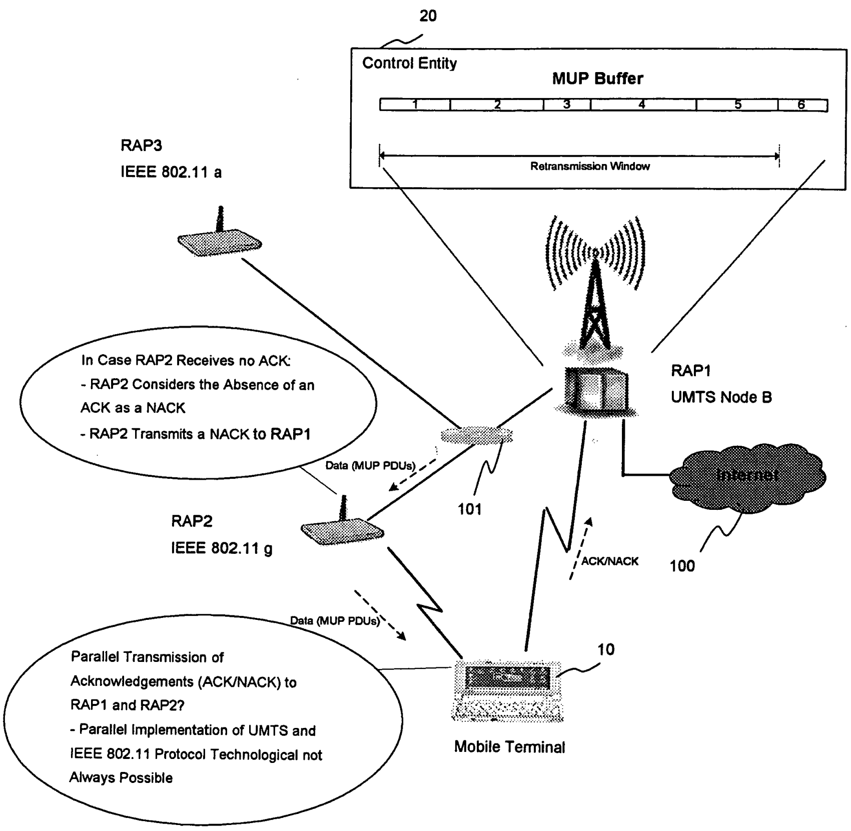


EP 1 841 117 A1

Printed by Jouve, 75001 PARIS (FR)

## Description

### TECHNICAL FIELD OF THE INVENTION

The invention relates to a method for retransmitting data packets to a mobile terminal in a network and an adapted access point and control entity for performing the method, respectively.

### BACKGROUND OF THE INVENTION

In the recent years, a variety of widely spread wireless communication networks has been developed. These networks use different access technologies and range from wireless personal area networks to satellite based networks, that are globally available. Between the above mentioned extremes, there is a variety of different networks and network technologies available that provide local, regional or country wide coverage, such as Bluetooth, Wireless-LAN using the IEEE 802.11 standard or cellular telecommunication networks such as GSM or UMTS.

Upon movement of a user, different network access technologies may be available to the user terminal. Small areas with a typical size of a building are often covered by networks using Bluetooth, DECT or Wireless-LAN (W-LAN) technologies. In a private environment the user e.g. favors using a headset or the like supporting Bluetooth technology or using the service provided by a W-LAN hotspot, that is typically available at airports, railway stations, internet cafes, etc.

In an urban environment the user terminal can be connected to a cellular network, whilst upon movement to a more rural area the service may be provided by a different network provider. So the network technology e.g. GSM or UMTS may remain unchanged but the access network and the service provider changes. Upon further location change, e.g. when the user crosses the borders of a country, the need for roaming between networks of different providers and even handovers between different network technologies very likely arises.

The user may move to areas where no network service is available except for satellite based network service. Also in this situation there may be the necessity to handoff the mobile terminal e.g. from a UMTS network to a satellite based network.

In addition, not only the handoff of mobile terminals between different access networks and different access technologies, also parallel communication with different networks, network technologies, or different access points may be of interest. Upon movement of a user to an airport or a railway station, it may be of interest to receive services e.g. an updated timetable via a local W-LAN hotspot service, while remaining connected to e.g. a voice service provided by UMTS.

In summary, nowadays a user terminal upon movement may utilize a variety of different wireless communication networks, network technologies and services that are available. It may be desirable to handoff the mobile terminal, to establish one ore more connections and to keep the mobile terminal connected via one or more radio access points or radio access technologies.

Different networks and network technologies can be coupled with the aid of the Multi-radio Unification Protocol ("A Multi-Radio Unification Protocol for IEEE 802.11 Wireless Networks", Adya et. al, Proceedings of the first international conference on broadband networks, BROADNETS'04). This protocol is applicable to heterogeneous wireless communication networks using e.g. IEEE 802.11 and UMTS access technology. In such a network it is not only desirable to handoff the mobile terminal easily across the various networks; the mobile terminal may also be capable of communicating with more than one radio access point at the same time, using the respective radio access technique the access point supports.

The option of parallel data transmission leads inter alia to an increase of reliability of the connection and a higher data throughput. A further advantage of parallel transmission is the optimized use of different bandwidths offered by the respective access point, i.e. the respective access technology. Data related to different applications such as voice service or data download may be provided to the mobile terminal using a radio access technology offering the appropriate bandwidth, e.g. IEEE 802.11 may be used for high speed data packet services and UMTS may be used for voice services.

It may be even possible that within one application, e.g. the audio stream is provided by the radio access technique offering the lower bandwidth and the video stream is provided by the radio access technique offering the higher bandwidth.

Additional to bandwidth also the data delay is desired to be within a certain range, appropriate to the specific application. Some applications e.g. data download are delay insensitive, other services, like Voice-over-IP (VoIP) or video streaming are not.

In radio access networks, transmission of the same data flow via different radio access points is possible at different transmission time intervals (TTIs). This possibility implies a very dynamic switching of the radio access point and in some cases switching of the radio access technology as well.

In order to provide best quality of service to the mobile terminal in these radio access networks, a multi-radio Automatic Repeat Request (ARQ) mechanism is typically implemented. The term multi-radio ARQ means that link layer acknowledgements for data packets can be transmitted via a different radio access point than the one used for the data transmission. The motivation for introducing multi-radio ARQ mechanisms, is to avoid cases where the radio access point switching periods may be very long. This might happen in some cases when data and acknowledgement transmission are done via the same radio access point, as the delay on uplink and downlink may be significantly different.

To optimize system throughput and to minimize the signaling overhead it is desirable to resend a data packet only when this is needed and only on that specific part of the link where it is absolutely required. Further, in order to prevent abnormal situations in the sense that e.g. the transmission of the data flow stagnates, it is of interest to send acknowledgement messages without considerable delays. This delay times should be at least not higher than the ones observed in case of absence of a multi-radio ARQ mechanism. A further appropriate measure to minimize the control signaling overhead may be to prevent duplicated transmission of acknowledgement messages or duplicated retransmission of data packets.

## SUMMARY OF THE INVENTION

The object of the invention is to minimize the transmission delay and signaling overhead for the retransmission of data packets from a control entity to a mobile terminal.

The problem is solved by the subject matter of the independent claims. Advantageous embodiments of the invention are subject matter of the dependent claims.

One embodiment of the invention provides a method for transmitting data packets in a network comprising a control entity, a mobile terminal and a first and a second access point. The control entity transmits data packets to the mobile terminal. A retransmission packet for the respective data packet that has been transmitted to the mobile terminal is sent in two alternative situations. First, in the case a negative acknowledgement message is received via the first access point. Second, in the case a negative acknowledgement message is received via the second access point and no positive acknowledgement message has been received or is received within a certain time period after reception of the acknowledgement message via the second access point via the first access point.

According to a further embodiment of the invention, the control entity receives only negative acknowledgement messages and no positive acknowledgement messages from the second access point.

In a further embodiment of the invention, the network comprises a control entity, a mobile terminal, a first and a second access point. Transmission of data packets to the mobile terminal is done via the second access point. A retransmission packet is sent to the mobile terminal in case, a negative acknowledgement message is received via the first access point, or no positive acknowledgement message is received via the second access point or is received within a certain time period after reception of the acknowledgement message via the second access point.

According to a further embodiment of the invention, only positive acknowledgement messages and no negative acknowledgements are received via the second access point.

According to another embodiment of the invention, the control entity receives a report message from the second access point, indicating whether at least a part of the transmitted data packets has been delivered successfully or unsuccessfully to the mobile terminal. Further, the control entity retransmits data packets to the mobile terminal for which the report message indicates unsuccessful delivery.

In a further embodiment of the invention, the control entity transmits a polling message to the second access point in case no acknowledgement message is received via the first access point and no acknowledgement message is received via the second access point within a certain time period after reception of the first acknowledgement message. Subsequently, a report message is received in response to the polling message.

According to another embodiment of the invention, the control entity maintains a transmission window and determines a threshold parameter indicative to the number of packets within the transmission window that are left to send. A polling message is sent to the second access point in case the threshold parameter is exceeded.

In another embodiment of the invention, the threshold parameter is a value based on the difference of the sequence number of the next data packet to be sent and the highest sequence number in transmission window and the total number of data packets in the transmission window.

According to a further embodiment of the invention, the retransmission window is the retransmission window of a link layer buffer located in the control entity, controlled by a Multi Radio Unification Protocol (MUP).

In a further embodiment of the invention, the control entity repeats transmitting the polling message a predetermined number of times, if no report message is received in response to the respective polling message within a predetermined time period.

According to another embodiment of the invention, the control entity retransmits a data packet by performing the following steps. Determining whether the data packet has been already transmitted to the mobile terminal via the second access point. If so, the control entity transmits a command message to the second access point. This command message instructs the second access point to retransmit the respective data packet to the mobile terminal. If the respective data packet has not yet been transmitted to the second access point, the data packet is retransmitted to the mobile terminal via the second access point.

According to a further embodiment of the invention, the second access point is generating negative acknowledgements and sending them to the control entity. Further, the second access point, is implementing IEEE 802.11 technology.

In another embodiment of the invention, the first and second access point and the mobile terminal are implementing a Multi Radio Unification Protocol (MUP).

The above mentioned embodiments of the invention relate to the control entity, and the retransmission method performed by the control entity. The control entity may be located in one of the two access points. The mobile terminal may further be connected via two or more access points with the access network. A radio access point not comprising the control entity may perform retransmission of data packets, commanded by the control entity.

According to another embodiment of the invention, data packets are forwarded by an access point in a network further comprising a control entity and a mobile terminal. The access point receives a data packet from the control entity, buffers the respective data packet, and transmits the respective data packet to the mobile terminal. In the case the access point receives a negative acknowledgement message, this message is forwarded to the control entity. If the access point receives a command message from the control entity, commanding the retransmission of the respective data packet, the access point retransmits the respective buffered data packet to the mobile terminal.

In a further embodiment of the invention, an access point in a network further comprising a control entity and a mobile terminal, forwards data packets to the mobile terminal. The access point receives a data packet from the control entity, buffers the respective data packet, and transmits the respective data packet to the mobile terminal. If the access point receives a positive acknowledgement message, it forwards this message to the control entity. Further, the access point retransmits the respective buffered data packet to the mobile terminal upon reception of a command message from the control entity, commanding retransmission of the respective data packet.

According to a further embodiment of the invention, the access point deletes a respective buffered data packet in the case, no command message commanding retransmission of said data packet to the mobile terminal is received from the control entity or is received within a certain time period. Further, the respective data packet is deleted if no positive acknowledgement message for the respective data packet is received within a certain time period. If neither a positive nor a negative acknowledgement message is received from mobile terminal or is received within a certain time period, the respective data packet is also deleted.

In another embodiment of the invention, the access point stores acknowledgement messages indicating the successful or unsuccessful transmission of data packets to the mobile terminal. The access point further transmits a report message to the control entity. The report message is indicative of the successful or unsuccessful transmission of the data packets from the access point to the mobile terminal.

According to another embodiment of the invention, the access point sends a report message to the control entity, the report message being indicative of the successful or unsuccessful transmission of the data packets from the access point to the mobile terminal, in response to reception of a polling message or in a periodical manner.

Another embodiment of the invention provides a method for transmitting data packets to a mobile terminal via a network, comprising at least a first and second radio access node, the first and second radio access node employing respectively a first and a second radio access technology different from one another. The method comprises transmitting, by the second radio access node, data packets to the mobile terminal, transmitting, by the mobile terminal, an acknowledgement message to the first radio access node, said acknowledgement message comprising information on a delivery of the respective data packet at the mobile terminal, and notifying, by the mobile terminal, the second radio access node about the transmission of the acknowledgement message to the first radio access node before transmitting the acknowledgement message to the first radio access node.

A further embodiment of the invention provides a method for transmitting data packets to a mobile terminal via a network, comprising at least a first and second radio access node, the first and second radio access node employing respectively a first and a second radio access technology different from one another. The method comprises transmitting, by the second radio access node, data packets to the mobile terminal, transmitting, by the mobile terminal, an acknowledgement message to the first radio access node, said acknowledgement message comprising information on a delivery of the respective data packet at the mobile terminal, and notifying, by the mobile terminal, the second radio access node about the transmission of the acknowledgement message to the first radio access node after having transmitted the acknowledgement message to the first radio access node.

According to a preferred embodiment of the invention, the method further comprises setting, by the second radio access node, a predetermined time period upon receiving no acknowledgement message from the mobile terminal, determining, by the second radio access node, that the respective data packet has not been received by the mobile terminal, when no acknowledgement message is received by the second radio access node from the mobile terminal within the set predetermined time period and a notification has been received by the second radio access node from the mobile terminal, and transmitting, by the second radio access node, a negative acknowledgment message to the first radio access node indicating that the respective data packet has not been received by the mobile terminal.

Another embodiment of the invention provides a method for receiving data packets via a network, comprising at least a first and second radio access node, the first and second radio access node employing respectively a first and a second radio access technology different from one another. The method is performed by a mobile terminal and comprises receiving data packets from the second radio access node, notifying the second radio access node about a transmission of an acknowledgement message to the first radio access node, said acknowledgement message comprising information on a delivery of the respective data packet at the mobile terminal, switching from the second radio access technology to the first radio access technology, and transmitting the acknowledgement message to the first radio access node.

Yet another embodiment of the invention provides a method for receiving data packets via a network, comprising at least a first and second radio access node, the first and second radio access node employing respectively a first and a second radio access technology different from one another. The method is performed by a mobile terminal and comprises receiving data packets from the second radio access node, switching from the second radio access technology to the first radio access technology, transmitting an acknowledgement message to the first radio access node, said acknowledgement message comprising information on a delivery of the respective data packet at the mobile terminal, switching back from the first radio access technology to the second radio access technology, and notifying the second radio access node about the transmission of the acknowledgement message to the first radio access node.

Another embodiment of the invention provides a system comprising a mobile terminal and a network comprising at least a first and second radio access node, the first and second radio access node employing respectively a first and a second radio access technology different from one another. The second radio access node is adapted to transmit data packets to the mobile terminal, the mobile terminal comprises transmitting means for sending an acknowledgement message to the first radio access node, said acknowledgement message comprising information on a delivery of the respective data packet at the mobile terminal, and the mobile terminal comprises notifying means for notifying the second radio access node about the transmission of the acknowledgement message to the first radio access node before transmitting the acknowledgement message to the first radio access node.

Ye another embodiment of the invention provides a system comprising a mobile terminal and a network comprising at least a first and second radio access node, the first and second radio access node employing respectively a first and a second radio access technology different from one another. The second radio access node is adapted to transmit data packets to the mobile terminal, the mobile terminal comprises transmitting means for sending an acknowledgement message to the first radio access node, said acknowledgement message comprising information on a delivery of the respective data packet at the mobile terminal, and the mobile terminal comprises notifying means for notifying the second radio access node about the transmission of the acknowledgement message to the first radio access node after having transmitted the acknowledgement message to the first radio access node.

According to a preferred embodiment of the invention, the second radio access node further comprises setting means for setting a predetermined time period upon receiving no acknowledgement message from the mobile terminal, determining means for determining that the respective data packet has not been received by the mobile terminal when no acknowledgement message is received by the second radio access node from the mobile terminal within the set predetermined time period and a notification has been received by the second radio access node from the mobile terminal, and transmitting means for transmitting a negative acknowledgment message to the first radio access node indicating that the respective data packet has not been received by the mobile terminal.

Another embodiment of the invention provides a mobile terminal adapted to receive data packets via a network, said network comprising at least a first and second radio access node, the first and second radio access node employing respectively a first and a second radio access technology different from one another. The mobile terminal comprises receiving means for receiving data packets from the second radio access node, notifying means for notifying the second radio access node about a transmission of an acknowledgement message to the first radio access node, said acknowledgement message comprising information on a delivery of the respective data packet at the mobile terminal, switching means for switching from the second radio access technology to the first radio access technology, and transmitting means for transmitting the acknowledgement message to the first radio access node.

Yet another embodiment of the invention provides a mobile terminal adapted to receive data packets via a network, said network comprising at least a first and second radio access node, the first and second radio access node employing respectively a first and a second radio access technology different from one another. The mobile terminal comprises receiving means for receiving data packets from the second radio access node, switching means for switching from the second radio access technology to the first radio access technology and switching back from the first radio access technology to the second radio access technology, transmitting means for transmitting an acknowledgement message to the first radio access node, said acknowledgement message comprising information on a delivery of the respective data packet at the mobile terminal, and notifying means for notifying the second radio access node about the transmission of the acknowledgement message to the first radio access node.

## BRIEF DESCRIPTION OF THE FIGURES

In the following the invention is described in more detail in reference to the attached figures and drawings. Similar or corresponding details in the figures are marked with the same reference numerals.

**Fig. 1** shows a network wherein a mobile terminal is connected to a UMTS Node B and an IEEE 802.11g access point,

**Fig. 2** shows a flowchart of a method for retransmitting data packets, according to an embodiment of the invention,

**Fig. 3** shows a timeline associated to the method for retransmitting data packets, depicted in the flowchart of Fig. 2, according to an embodiment of the invention,

**Fig. 4** depicts another flowchart of a further exemplary method for retransmitting data packets, according to an embodiment of the invention,

**Fig. 5** shows a flowchart of alternative method steps to the method steps 206, 207, 208 in Figs. 2 and 4 respectively, according to an embodiment of the invention,

**Fig. 6** depicts a flowchart of an exemplary method further specifying method step 210 in the flowcharts of Figs. 2 and 4, according to an embodiment of the invention,

**Fig. 7** shows a flowchart of a method for handling acknowledgement messages according to an embodiment of the invention,

**Fig. 8** shows a flowchart of another method for handling acknowledgement messages according to an embodiment of the invention,

**Fig. 9** shows a flowchart of a method for retransmitting data packets according to an embodiment of the invention,

**Fig. 10** depicts a flowchart of an exemplary method for deleting data packets, further specifying step 709 in the flowcharts shown in Figs. 7 and 8, according to an embodiment of the invention,

**Fig. 11** gives an overview of a system executing parallel processes, further specified in Figs. 11 to 13, for transmission and retransmission of data packets, according to an embodiment of the invention,

**Fig. 12** shows a flowchart of a method for transmitting data packets, according to an embodiment of the invention,

**Fig. 13** shows a flowchart for retransmitting data packets, according to an embodiment of the invention,

**Fig. 14** shows a flowchart for transmitting polling messages, according to an embodiment of the invention,

**Fig. 15** shows a flowchart for retransmitting data packets, according to an embodiment of the invention.

**Fig. 16** shows a flowchart for sending report messages, according to an embodiment of the invention.

## DETAILED DESCRIPTION OF THE INVENTION

Before discussing the different exemplary embodiments of the invention, the term control entity frequently used in the following will be defined.

The control entity is a functional entity independent of its physical implementation. It may be realized by hardware elements; equally it may be implemented in software or a combination of hardware and software elements. It is capable of providing a packet data service to a mobile terminal. Further, it receives acknowledgement messages for the respective data packets and depending on whether a negative or positive acknowledgement message is received, the control entity is capable of performing retransmissions and may maintain a retransmission buffer for this purpose. When implementing MUP, the retransmission buffer is typically referred to as the MUP-buffer.

Fig. 1 shows a network wherein a mobile terminal 10 is connected to a UMTS Node B and an IEEE 802.11g access point. Radio access point RAP1 is a UMTS node B, radio access points RAP2 and RAP3 are W-LAN hotspots implementing different variants of the IEEE 802.11 standard. The cooperation of UMTS and IEEE 802.11 is exemplarily depicted because this combination is the most likely one to appear in the near future. Technology specific issues are put into consideration as well.

The invention is not limited to these kinds of networks, it can be applied to a variety of different heterogeneous networks. Such a heterogeneous network may comprise different network technologies such as IEEE 802.11 and UMTS, CDMA 2000, Bluetooth, GSM, standards for satellite communication, etc.

Also a scenario wherein all access points support the same access technology can be imagined, e.g. a network of IEEE 802.11g access points. It can also be extended to non infrastructure-based networks, such as ad hoc or mesh networks. Also different network topologies may be realized e.g. in that additional gateways to other communication networks exist or the control entity 20 is located in another radio access point, or in a different network system.

A data packet service, e.g. a data download from the Internet 100, can be provided to the mobile terminal 10 via access point RAP2. The data packets downloaded from the Internet 100 are forwarded by the control entity 20 to the access network. The downloaded data is transmitted along a path using the wired link from access point RAP1 via the network switch 101 to access point RAP2, and finally reaching the mobile terminal 10 via the air interface.

The mobile terminal 10 is simultaneously communicating with the control entity 20 via a UMTS Node B (RAP1) and the W-LAN hotspot (RAP2). The control entity 20 may be located in access point RAP1. The access points may implement the Multi-Radio-Unification Protocol (MUP). The implementation of the MUP protocol allows the implementation and use of multi-radio automatic-repeat-request (ARQ) mechanisms.

A MUP-buffer providing data packets for transmission and retransmission of a data packet service to the mobile terminal 10 may be further a part of the control entity 20. This MUP buffer can act as a common transmission buffer containing transmission and retransmission counters, transmitted physical data units (PDUs) and associated variables. The MUP buffer may be controlled by the control entity 20 that is a part of the MUP network layer. Acknowledgement messages, acknowledging the delivery of data packets of the data packet service are evaluated by the control entity 20.

In this illustrative example, access point RAP1 supports UMTS/HSDPA (High Speed Downlink Packet Access) technology, whilst access point RAP2 supports the IEEE 802.11 technology. These two different radio access points are physically coupled with the aid of a wired link. Coupling of the respective radio access technologies is provided by the use of the MUP protocol. The MUP protocol is used so as to assure unified data link layer processing and a common interface to the IP network. The mobile terminal 10 communicates, i.e. it has activated communication sessions, with both radio access points, using the respective radio access technology. Access point RAP1 contains the MUP (re-) transmission buffer and the interface to the IP protocol; hence it is the gateway to the IP network. If the mobile terminal 10 is communicating with the IP network via access point RAP2, this access point needs to communicate with the access point RAP1. The wired link, connecting the two access points, can be a point to point connection, or the link can be shared by a plurality of access points as it is shown in Fig. 1. In the case, the wired link is shared, a switch 101 is used so as to direct traffic to/from different access points from/to the access point comprising the MUP buffer (RAP1). In Fig. 1, the two access points (RAP1 and RAP2) communicate via an appositely defined communication protocol, the MUP Communication Protocol. The control signaling is done with the aid of this protocol.

The MUP protocol enables dynamic switching of radio access points providing the data service to the mobile terminal 10. The different radio access points involved in this switching process might support the same, or different radio access technologies. Due to this possibility, the same data flow may be provided to the mobile terminal 10 via different radio access points. The switching of radio access points may be in certain cases very dynamic, i.e. it may be performed at time periods of a transmission time interval (TTI).

In the case of very dynamic access point switching the optimum system performance may be achieved, if a multi-radio ARQ mechanism is implemented. It is very likely that data and acknowledgment transmission via the same radio access point might lead to very long access point switching periods. In such a case the potential of the coupled network (e.g. with respect to data throughput) is not exploited to the maximum.

The term multi-radio ARQ means that link layer acknowledgements for certain data packets can be transmitted via a different radio access point than the one used for the data transmission. This mechanism requires that acknowledgment messages are transmitted without considerable delays, or at least with delays that are not higher than the ones observed in the case of absence of a multi-radio ARQ mechanism.

In a network that implements the MUP protocol, and access point switching is performed very dynamic, a mobile terminal 10 can transmit an acknowledgment message for one data packet (PDU) to a radio access point different from the one that is used for the downlink data transmission of this specific data packet.

The mobile terminal 10 may be further enabled to select dynamically the radio access point to which it transmits the control messages e.g. acknowledgement messages. The mobile terminal 10 may base its decision on any kind of criterion, e.g. radio channel quality. In another method for selecting a radio access point to which acknowledgement messages are to be sent, selection may be based on an expected transmission delay the acknowledgement message experiences on its path from the mobile terminal 10 to the control entity 20. This option is presented in the corresponding European Patent Application of the same applicant with the title: "A method for sending acknowledgement messages within a wireless communication network ", application no. EP05027218.6.

If, at a designated TTI, data transmission occurs via the IEEE 802.11g access point (RAP2), then there are two options for the transmission of the acknowledgment by the mobile terminal 10 that may execute any type of radio access point selection method. First, to transmit the acknowledgment message via the IEEE 802.11g access point (RAP2); second to transmit the acknowledgment message directly to the UMTS/HSDPA Node B (RAP1).

In the above presented case, the access point for sending acknowledgement messages is selected dynamically, there may arise the need for communication, or a communication protocol between access points RAP1 and RAP2, so as to exchange information related to acknowledgments. In particular, there may be the need that the access point not comprising the control entity 20 forwards control information to the access point comprising the control entity 20, as will be outlined in the following.

In the case of dynamic access point switching, there might occur situations where a positive acknowledgment message and a negative acknowledgement message for the same data packet (PDU) reach the control entity 20 i.e. the MUP buffer. An exemplarily situation leading to the reception of contradictory acknowledgement messages at the control entity 20 will be discussed below.

As depicted in Fig. 1, access point RAP1 implements UMTS technology and access point RAP2 implements IEEE 802.11 technology. The data transmission takes place via access point RAP2. The mobile terminal 10, according to an access point selection mechanism, decides to transmit the acknowledgement message indicating successful transmission of a data packet to access point RAP1.

According to its technical implementation radio access point RAP2 considers the non-reception of an acknowledgment message within a time period defined by the "Duration" field as a negative acknowledgment from the mobile terminal 10 (see IEEE Standard 802.11, 1999 Edition, "Part 11: Wireless LAN Medium Access Control (MAC) and Physical Layer (PHY) specifications").

The IEEE 802.11 access point (RAP2) is awaiting for an immediate acknowledgment after each MUP PDU transmission, according to the IEEE 802.11 operation, as this is defined in the standard. More precisely, upon each data transmission the IEEE 802.11 access point reserves the transmission channel for a specific time duration. In case the acknowledgment message is not arriving at the access point within the time window defined by the "Duration" field of the Request To Send (RTS) message, then the IEEE 802.11 access point considers that the data transmission was not successful.

This situation may arise, if the positive acknowledgment is transmitted via another other access point in the network. If exemplarily referring to Fig.1, the positive acknowledgement message is sent to access point RAP1.

After expiration of a timer defined by the value of the above mentioned "Duration" field, access point RAP2 forwards a self generated negative acknowledgment message to the control entity 20. As a result, the control entity 20 receives a positive acknowledgement message from access point RAP1 and a negative acknowledgment message from access point RAP2 for the same data packet (i.e. the same MUP PDU). The same applies to the case a negative acknowledgement message in sent to access point RAP1. In this case the control entity 20 would receive two negative acknowledgements for the same data packet.

The most pertinent situation occurs in the case the transmission delay for a positive acknowledgement message transmitted from the mobile terminal 10 via access point RAP1 to the control entity 20 is larger than the transmission delay for a negative acknowledgement message sent from access point RAP2 to the control entity 20. In this particular case the negative acknowledgement message reaches the control entity 20 before the positive acknowledgement message and causes a redundant retransmission of a data packet.

This above described problem is expected to occur in any system that employs the same ARQ pattern, as the one used in IEEE 802.11. Consequently, there seems to arise the need for communication between the radio access points involved in data or acknowledgement transmission or reception with the mobile terminal 10. The communication protocol should minimize delays of the transmitted acknowledgments and minimize signaling and data traffic in the wired links.

The reception of contradictory acknowledgement messages may cause errors within the MUP protocol or may lead to unnecessary retransmissions of data packets. Especially in the case the packet data service is provided to the mobile terminal 10 via access point RAP2, retransmission of data packets would increase the load of the wired link. This may lead to increasing transmission delays, even for other terminals that are e.g. connected to access point RAP3. Additionally, the useless transmission of data packets leads to reduced data throughput and a degradation of the overall network performance.

An example of a network situation leading to the reception of contradictory acknowledgement messages will be outlined in the following.

Access point RAP2 is providing a packet data service to the mobile terminal 10 which is executing an access point selection method. The goal of this method is that the mobile terminal 10 transmits acknowledgment messages via the access point offering the lowest transmission delay. However, there might be situations where the acknowledgment message is transmitted via the access point offering at the moment of acknowledgment transmission the highest transmission delay. This situation may arise due to variations of the transmission delay in the wired link between access point RAP1 and access point RAP2. Due to these variations in the transmission delays the value of the expected transmission delay that had been signaled to the mobile terminal 10 might not be the minimum transmission delay at the moment of the acknowledgement transmission.

Consequently, a negative acknowledgment message generated by access point RAP2 can reach the control entity 20 located in access point RAP1 before the positive acknowledgment, which is directly sent be the mobile terminal 10 to access point RAP1. If the MUP protocol is reacting to this situation in the way as presently defined by the standard, the negative acknowledgment that arrives first is considered as valid and hence the positive acknowledgment arriving afterwards is ignored. This results in unwanted retransmissions of data packets.

A solution to prevent the appearance of contradictory acknowledgement messages would be that the mobile terminal 10 transmits acknowledgments via both of the available access points simultaneously. If referring to the network depicted in Fig. 1, this would require the concurrent operation of two processes inside the mobile terminal 10; one for the UMTS and the second one for the IEEE 802.11 protocol. This may be not always a technologically feasible option and may additionally lead to increased power consumption of the mobile terminal 10.

According to an exemplary embodiment of the invention, the control entity 20 checks whether a positive acknowledgment for the same MUP Physical Data Unit (PDU) has been previously received upon reception of a negative acknowledgment from access point RAP2. In case a positive acknowledgment has already been received, then the negative acknowledgment may be ignored i.e. the acknowledgement message may be discarded. In case no positive acknowledgment has been received, a timer may start. The control entity 20 may consider the negative acknowledgment message for a certain MUP PDU as valid, only in the case the timer expires and no positive acknowledgment for the same PDU reaches access point RAP2 (before expiration of the timer).

In the following, different exemplary embodiments of the invention related to the control entity 20 will be discussed.

The concept underlying the present invention is to immediately consider the positive acknowledgments received at the control entity 20 and to ignore negative acknowledgments for the same data packet.

Fig. 2 shows a flowchart of a method for retransmitting data packets to a mobile terminal 10. In this example, the method steps may be carried out by the control entity 20.

The control entity 20 transmits 201 a data packet with the serial number N to the mobile terminal 10. The transmission might be performed via one or via a plurality of access points. Further, the mobile terminal 10 listens 202 to an acknowledgement message, acknowledging the successful or unsuccessful transmission of the respective data packet to the mobile terminal 10. The control entity listens 202 for acknowledgement messages from access point RAP1 and RAP2.

In the case an acknowledgement message indicating the unsuccessful transmission of the data packet with the serial number N is received 203 via radio access point RAP1, the data packet with the serial number N is retransmitted 210 to the mobile terminal 10.

In the case no acknowledgement message indicating the unsuccessful transmission of the respective data packet is received 203 via access point RAP1, it is tested 204 whether an acknowledgement message indicating unsuccessful transmission of the data packet with the serial number N is received via access point RAP2. If this is not the case, the method goes back to listening 202 to acknowledgement messages.

In the case an acknowledgement message indicating unsuccessful transmission of the data packet number N is received via radio access point RAP2, the exemplary method presented here checks 205 whether for this specific data packet (in this case the data packet with the serial number N) an acknowledgement message indicating successful transmission of the data packet has been already received via access point RAP1. If so, the negative acknowledgement message received from access point RAP2 is discarded.

If no positive acknowledgement message has been received for the specific data packet number N via access point RAP1, a timer is started 206 just after the instant of reception of a negative acknowledgment via access point RAP2.

After expiration 207 of the time span DT2, the check 208 whether a positive acknowledgement message has been received during the time span DT2 defined by the timer in step 206, may be repeated by the control entity 20. In the case a positive acknowledgement message has been received during DT2 the negative acknowledgement message received via RAP2 may be ignored 209.

In the case, no acknowledgement message indicating the successful delivery of data packet number N to the mobile terminal 10 is received even after the aforementioned time period DT2, the respective data packet is retransmitted 210 to the mobile terminal 10. The value of the timer DT2 may be for example specified by the network operator; a value equal to few TTIs should be a meaningful choice.

Fig. 3 shows a timeline corresponding to the method depicted in Fig. 2 according to an exemplary embodiment of the invention. For the here presented timeline a situation wherein the control entity 20, subsequent to the reception of a negative acknowledgement message from access point RAP2, receives a positive acknowledgement message from access point RAP1 is assumed.

At t1, the control entity 20 transmits the data packet with the serial number N to the mobile terminal 10. After a certain transmission time interval, the respective data packet reaches the mobile terminal 10 at t2. Further, at t3 the control entity 20 receives an acknowledgement message indicating the unsuccessful delivery of data packet number N from access point RAP2. Consequently, the control entity 20 starts a timer DT3 if no acknowledgment message indicating the successful transmission of the respective data packet has been already received.

After a certain time span, at t4, the control entity 20 receives a positive acknowledgement message for the data packet with the serial number N from access point RAP1. In response to this event, the previously received negative acknowledgement message is discarded and the timer DT3 is stopped. The time period DT3 expires later at t5.

Fig. 4 shows a flowchart of a method for retransmitting data packets to a mobile terminal 10. In this exemplary embodiment the method steps are carried out by the control entity 20. By way of an example, the control entity 20 may be located in a network as exemplary depicted in Fig. 1.

The control entity 20 transmits 201 a data packet with the serial number N to the mobile terminal 10. In the case an acknowledgement message indicating the unsuccessful delivery of the data packet with the serial number N is received 203 from radio access point RAP1, the respective data packet is retransmitted 210 to the mobile terminal 10. In case no acknowledgement message indicating the unsuccessful delivery of the data packet N is received 203 from access point RAP1, the method according to the here presented exemplary embodiment checks 401 whether a positive acknowledgement for the specific data packet is received via radio access point RAP2. If yes, the subsequent data packet (with the serial number N+1) is transmitted 402 to the mobile terminal 10.

If no positive acknowledgement message is received from access point RAP2, a timer DT4 is started 206. After expiration 207 of the respective period DT4, the control entity 20, according to the depicted method, repeatedly checks whether a positive acknowledgement message is received 208 for the data packet with the serial number N from radio access point RAP1. If so, the subsequent data packet is sent 402 to the mobile terminal 10. If not, the data packet with the serial number N is retransmitted 210 to the mobile terminal 10.

Fig. 5 shows a flowchart related to the transmission of polling messages and reception of report messages of a method comprising alternative method steps to the steps 206, 207 and 208 in Figs. 2 and 4. The here presented method steps 501, 502 and 503 optionally replace the aforementioned method steps in Figs. 2 or 4. In this exemplary embodiment of the invention, the method steps can be carried out by the control entity 20. The control entity 20 and access point RAP1 may be located in a network like the one depicted in Fig. 1. According to a further exemplary embodiment of the invention, the method steps in Fig. 5 may be implemented by the control entity 20 parallel to the method steps 206, 207 and 208 in Figs. 2 and 4, respectively. Handling of acknowledgement messages and handling of polling an report messages may be performed independently from each other by the control entity 20.

Starting from method step 205 in Fig. 2 or method step 401 in Fig. 4, respectively, the method shown in Fig. 5 sends 501 a polling message to access point RAP2. Upon reception 502 of a report message from access point RAP2. The step of sending 501 a polling message may be performed on a per packet basis or may be initialized by a certain event. This embodiment focuses on the polling on a per packet basis, the option that the polling may be performed event triggered will be discussed in the description of Fig. 13.

The method presented in Fig. 5 checks whether the aforementioned report message indicates 503 the successful reception of the data packet with the serial number N. If so, the method follows the YES branch to subsequent step 209 and step 402 in Figs. 2 and 4, respectively. In case the received report message is not indicating successful reception of data packet number N the method follows the NO branch to subsequent step 210.

Transmission of polling messages by the control entity and transmission of report messages by an access point in response to the received polling messages may be performed on a per packet basis, periodically or upon occurrence of a certain event. In particular, polling or reporting may be performed periodically in time. Transmission of a polling or report message may be performed upon reception of a command message commanding the respective action, received e.g. by a higher layer.

Fig. 6 shows a flowchart of an alternative method optionally replacing step 210 in the flowcharts presented in Figs. 2 and 4. The here presented method further specifies the step of retransmitting 210 the data packet with the serial number N to the mobile terminal 10. The method according to an exemplary embodiment of the invention depicted in Fig. 6 checks 601 whether the data packet number N has already been transmitted to access point RAP2. If not, the respective data packet is transmitted 602 to radio access point RAP2. In the case data packet number N has already been transmitted to radio access point RAP2, a command message commanding the retransmission of the respective data packet is sent 603 to radio access point RAP2.

This alternative method of retransmission according to an exemplary embodiment of the invention allows to minimize the signaling overhead and reduces traffic load on the wired link between the control entity 20 and access point RAP2.

While the various embodiments of the invention discussed in Figs. 2 - 6 relate to the control entity 20, the following embodiments of the invention relate an access point providing a packet data service to the mobile terminal 10. This access point is preferably not comprising the control entity 20. However, the access point may implement the MUP protocol and may provide a buffer for storing data packets.

Fig. 7 shows a flowchart of a method for handling acknowledgement messages received from the mobile terminal 10. According to this exemplary embodiment, the method steps may be carried out by an access point not comprising the control entity 20. By way of an example, the access point may be identified with access point RAP2 in Fig. 1.

Upon reception 701 of a data packet with the serial number N, the data packet is buffered 702. Further, the access point forwards 703 the data packet number N to the mobile terminal 10. Upon reception 704 of an acknowledgement message, the method tests 705 whether the acknowledgement message received indicates the respective data packet has been successfully delivered to the mobile terminal 10. In the case such a positive acknowledgement message is received, this specific positive acknowledgement message is stored 706. In the case the acknowledgement message indicates unsuccessful delivery of the data packet with the serial number N to the mobile terminal 10, this positive acknowledgement message is forwarded 707 to the control entity 20.

Fig. 8 shows a flowchart of alternative method steps optionally replacing steps 706 and 707 in the flowchart depicted in Fig. 7. The method according to an exemplary embodiment of the invention shown in Fig. 8 checks 705 whether the acknowledgement message received indicates the data packet with the serial number N has been successfully delivered to the mobile terminal 10. In the case such a positive acknowledgement message is received, this specific positive acknowledgement message is forwarded 801 to the control entity 20. In the case the acknowledgement message indicates unsuccessful delivery of the data packet with a serial number N to the mobile terminal 10, this negative acknowledgement message is stored 802.

The method according to Fig. 7 or 8 includes immediate transmission of the positive and negative acknowledgements, respectively, from access point RAP1 to the control entity 20, in order to prevent further transmission delays. Fig. 7 and Fig. 8 provide opposite methods according to an embodiment of the invention providing that the access point forwards just negative and just positive acknowledgement messages, respectively.

According to an alternative embodiment of the invention, positive and negative acknowledgement messages may be stored in method step 705. Consequently, method step 706 in Fig. 7 and step 802 in Fig. 8, respectively would be dispensable for this specific embodiment. Acknowledgement messages that are stored by access point RAP 2 may be used as a basis for a report message, reporting on the successful or unsuccessful delivery of data packets to the mobile terminal 10. Further details related to the transmission of report messages will be explained in combination with Fig. 15.

Fig. 9 shows a flowchart of a method for retransmitting data packets from an access point to a mobile terminal 10. According to this exemplary embodiment, the method steps may be carried out by an access point preferably not comprising the control entity 20. By way of an example, the access point managing retransmission of data packets may be identified with access point RAP2 in Fig. 1.

According to this exemplary embodiment, method steps 701-703 referring to reception, buffering and forwarding of data packet number N are identical to the respective method steps in Fig. 7. The access point further listens to command messages from the control entity 20, commanding retransmission of the respective data packet from the access point to the mobile terminal 10. In the case such a command message is received 901, the data packet with the serial number N is retransmitted 903 to the mobile terminal 10. In the case no command message is received, the data packet identified by the serial number N is discarded 902.

According to a further exemplary embodiment of the invention, the access point may listen to acknowledgement 705 and command messages 901 at the same time. The method of handling acknowledgement messages depicted in Fig. 7 and 8 respectively and the method for handling command messages depicted in Fig. 9 may be independently implemented by the respective access point.

Fig. 10 shows a flowchart according to an exemplary embodiment of the invention further specifying the deletion of a data packet according to method step 902 in Fig. 9. The here presented method may optionally replace method step 902 in Fig. 9. According to this exemplary embodiment of the invention the method steps are also carried out by an access point not comprising the control entity 20. Exemplarily referring to a network as depicted in Fig. 1, the access point executing the method steps may be identified with access point RAP2.

The access point listens 1001 to command messages from the control entity 20, commanding retransmission of the data packet with a serial number N. At the same time the access point listens 1001 to acknowledgement messages from the mobile terminal 10 acknowledging the successful or unsuccessful reception of the data packet number N.

In case an acknowledgement message or a command message is received 1002, it is tested 1003 whether the received message is an acknowledgement message indicating successful delivery of the data packet number N, to the mobile terminal 10. If so, the method goes back to step 1001 and keeps listening to command and acknowledgement messages. If no positive acknowledgement message is received a timer DT101 is started 1004. After expiration 1005 of the respective timer it is checked whether the positive acknowledgement message indicating successful delivery of data packet number N has been received 1006 within DT101. If no positive acknowledgement message has been received within the aforementioned time span, the data packet corresponding to serial number N is discarded 1010. In the case a positive acknowledgement message is received the access point goes back to listening 1001 to command and acknowledgment messages.

In the case no command message and no acknowledgement message is received 1002, a timer DT1 02, is started 1007. After expiration 1008 of this respective timer DT102 the access point checks whether a command message or an acknowledgement message has been received 1009 within time span DT102. If no message has been received within this time span data packet number N is discarded 1010. In the case a message has been received the access point goes back to listening to command messages and acknowledgement messages 1001.

Fig. 11 shows a systematic overview of parallel processes carried out by the control entity 20 according to different exemplary embodiments of the invention. By way of an example the mobile terminal 10 and the control entity 20, may be situated in a network as depicted in Fig. 1.

The control entity 20 manages transmission of data packets, handles acknowledgement messages directly received from the mobile terminal 10, and updates the various variables relevant to update the MUP buffer. The aforementioned functionalities that are mainly depicted in Fig. 12, shall be represented by the functional block 1101. A further parallel process performed by the control entity 20, is to listen to acknowledgement messages received from access point RAP2. The management of acknowledgement messages shall be indicated by block 1102, the corresponding method steps are mainly depicted in Fig. 13. The control entity 20 further manages the transmission of polling messages the control entity 20 sent to access point RAP2 and handles the report messages received in response to the aforementioned polling messages. These functions shall be indicated by block 1103 and mainly refer to the method steps depicted in Fig. 14.

It has to be noted that the here presented method does not include the MUP protocol mechanisms related to various measurements of delay times, control signaling, radio access selection, context transfer and other link layer functions that MUP realizes. The three main functional methods 1101-1103 are running independently, information between the methods is exchanged.

The following Figs. 12-14 give a systematic overview of different functionalities of the control entity 20. The flowcharts are coupled together via connection points indicated by identical letters. By way of an example the network components may be arranged as depicted in Fig. 1. The first parallel process depicted in Fig. 12 is responsible for listening to the port connected to access point RAP2 for eventual acknowledgments and other messages. The second parallel process shown in Fig. 13 is responsible for transmitting data packets (MUP PDUs) to the mobile terminal 10, for receiving acknowledgment messages from the mobile terminal 10 and updating the MUP buffer according to the acknowledgments it receives, either from the mobile terminal 10, or from access point RAP2. Therefore, this process interacts with the process that listens to the port communicating to access point RAP2. It takes the negative acknowledgments received from access point RAP2 and it updates its MUP buffer variables accordingly. In addition, it commands the (re-)transmission of data packets (MUP PDU) that has not been successfully received at the mobile terminal 10 via access point RAP2, in case this is the decision of the access selection function. The third parallel process depicted in Fig. 14 is responsible for the transmission of the polling messages to access point RAP2 and their reception. Additionally, there is a need for communication between this process and the process managing the MUP buffer as will be further explained in the description of Fig. 14.

Fig. 12 shows a flowchart of a method according to an exemplary embodiment of the invention. The depicted method steps may be carried out by the control entity 20.

The control entity 20 maintains the MUP buffer and the associated variables i.e. the control entity 20 is in an active state 1201. In case the MUP buffer is empty 1202, the control entity 20 reinitializes its active state 1201. In the case the MUP buffer is not empty, data packets enter an access point selection method 1203 in order to be transmitted to the mobile terminal 10 via the most appropriate access point. In the case the packet data service is provided 1204 to the mobile terminal 10 via access point RAP1, data transmission and control messaging is performed 1205 according to the technology implemented by access point RAP1. The further method steps following connection point D are depicted in the flowchart in Fig. 14, the alternative case, data transmission is not performed via access point RAP1 will be discussed here.

In the case a data packet with a serial number N is not transmitted via access point RAP1, the control entity 20 waits for acknowledgement messages acknowledging the reception of the respective data packet at the mobile terminal 10. In the case an acknowledgement message indicating the unsuccessful delivery of the data packet number N is received 1206 via access point RAP2, the here presented flowchart enters the flowchart depicted in Fig. 13 via the connection point C. Before commenting on this option, the case no acknowledgement message indicating unsuccessful delivery of data packet number N is received via access point RAP2, will be discussed.

The control entity 20 determines 1207 whether the data packet number N has already been transmitted to the mobile terminal 10 via access point RAP2. If this is true, the control entity 20 transmits a command message to access point RAP2 commanding the retransmission of the respective data packet from access point RAP2 to the mobile terminal 10. In the case data packet number N has not yet been transmitted to the mobile terminal 10 via access point RAP2, the control entity 20 transmits 1209 the respective data packet to the aforementioned access point RAP2. Subsequent to both options, the here presented method enters the flowchart depicted in Fig. 14 via connection point D.

Fig. 13 shows a flowchart of a method performed by the control entity 20 parallel in time to the flowcharts presented in Figs. 12 and 14. The depicted method steps can be carried out by the control entity 20 according to an exemplary embodiment of the invention.

Parallel to the provision of a packet data service to the mobile terminal 10, the control entity 20 listens 1301 to acknowledgement messages from access point RAP2, indicating the unsuccessful delivery of data packets. Upon reception of a positive acknowledgment from access point RAP2, the control entity 20 considers this positive acknowledgment as valid immediately after its reception and updates its buffer, timers, etc. The control entity 20 keeps on listening to control messages until a negative acknowledgement is received 1203 from access point RAP2. If this is the case, the control entity checks 1204 whether a positive acknowledgement message has already been received from access point RAP1. If this is the case, the negative acknowledgement message previously received via access point RAP2 is discarded 1306. Further, the control entity 20 enters its active state. The present flowchart enters the flowchart of Fig. 12 via the connection point A.

In the case no positive acknowledgement message for data packet number N is received via access point RAP1, a timer DT13 is started 1304. After expiration 1305 of the respective timer the control entity 20 checks 1307 whether a positive acknowledgement message for data packet number N has been received via access point RAP1. The invention is not limited to the case detection 1307 of reception of a positive acknowledgement message from RAP1 for data packet number N is performed after expiration 1305 of timer DT13. The control entity 20 listens to the aforementioned positive acknowledgement also during the time period DT13.

In the case a positive acknowledgement message for data packet number N is received via access point RAP1 during the time period DT13, the negative acknowledgement message previously received from access point RAP2 is discarded 1306. In case no positive acknowledgement message is received via access point RAP1 for the respective data packet, data packet number N is retransmitted 1308 to the mobile terminal 10.

According to the here presented method, indicated by the connection point B, the control entity 20 performs an access point selection method 1203 (see Fig. 12) for retransmission of the data packet.

Fig. 14 shows a flowchart of a method performed by the control entity 20 according to an exemplary embodiment of the invention. This flowchart begins with connection point D also depicted in Fig. 12.

The control entity 20 checks 1401 whether the data packet serial number N has reached a certain threshold value. At this so-called "RAP2_Polling" threshold the control entity 20 sends a polling message to access point RAP2. In the case the critical data packet serial number has not yet reached the threshold value, transmission of data packets is continued using an access point selection 1203 method. This link is indicated by the connection point B connecting the flowchart depicted here with a flowchart of Fig. 12.

The threshold value "RAP2_Polling" is calculated based on a probability that the transmission window might stop, according to a further embodiment of the invention. Max_Tx_SN shall be the serial number at which the transmission window stops. The value of "RAP2_Polling" may be defined according to

$$RAP2_Polling = \alpha \bullet Max_Tx_SN\,. \qquad (1)$$

The factor $\alpha$ may be a value that can be defined by the network operator, or manufacturer. It can take a value between 0 and 1. Consequently, polling messages may be transmitted from the control entity 20 to access point RAP2 with the frequency specified by formula (1).

Formula (1) is based on the transmission window size and how close to its end the currently transmitted MUP PDU is located. Therefore, these transmission parameters have to be communicated to the process shown in Fig. 14.

In the case the data packet serial number has reached the polling threshold value "RAP2_Polling", the control entity 20 checks 1402 whether a polling message for the respective serial number N has already been sent 1402 to access point RAP2. If not, the internal counter N14 is set 1403 identical to 1. If yes, the control entity 20 transmits 1404 a polling message to access point RAP2. Subsequent to the transmission 1404 of the polling message, a timer DT14 is started 1405. After expiration 1406 of the respective timer, the control entity 20 checks whether a report message in response to the aforementioned polling message has been received 1407 from access point RAP2.

If so, the control entity 20 updates 1408 its internal counters, serial numbers and further variables related to the maintenance of the MUP buffer. Further, the threshold value "RAP2_Polling" is set to the actual serial number plus a certain value related to the polling period. The polling period represents the number of data packets that are transmitted to the mobile terminal 10 before a polling message is sent to access point RAP2. Additionally, to the aforementioned variable manipulation, the control entity 20 enters its active state 1201. The link between the flowcharts is indicated by connection point A.

In the case a report message is not received 1407 upon transmission of a polling message to access point RAP2, the control entity 20 increases 1409 its internal counter N14 by 1. Subsequently, it is checked 1410 whether the aforementioned internal counter N14 has reached its maximum value N14_MAX. If so, the control entity 20 sends 1411 a report message on the occurred error to the MUP management. The MUP management is in charge of controlling the overall function of the MUP protocol and is responsible for the communication with higher network layers. In addition, an alternative access point may update its MUP counters and continues data transmission. In the case the internal counter N14 has not yet reached 1410 its maximum value, the control entity 20 repeats transmitting 1404 a polling message to access point RAP2.

While the aforementioned flowcharts refer to functionality of the control entity 20, flowcharts representing functionality of access point RAP2 will be discussed in the following paragraphs.

Fig. 15 shows a flowchart of a method for transmitting and retransmitting data packets from an access point to the mobile terminal 10. The here presented method according to an exemplary embodiment of the invention may be carried out by an access point not comprising the control entity 20. If exemplarily referring to a network like the one depicted in Fig. 1, the access point implementing the here presented method may be identified with access point RAP1.

This access point is in an active state 1501, in that it is clear to receive data packets and at the same time it listens to control messages sent from the mobile terminal 10 to the respective access point. The access point forwards 1502 a data packet with the serial number N to the mobile terminal 10 and listens to acknowledgement messages from the mobile terminal 10. In the case an acknowledgement message is received 1503, indicating the successful delivery of data packet number N to the mobile terminal 10, the access point is not executing further functions and returns to its active state 1501.

Upon reception of a negative acknowledgment, this message is directly forwarded to the control entity 20. In order to avoid, retransmissions of the same data packet from access point RAP1 to RAP2. Access point RAP2 stores the not positively acknowledged data packets for a certain period of time. At the same time, the access point sets 1504 an internal counter N15 equal to 1.

Subsequently, an internal timer DT15 is started 1505 and the internal counter N15 is set 1505 equal to N15+1. As a subsequent step, the access point checks whether the internal counter N145 has exceeded 1506 an internal threshold value N15_MAX. In the case this internal counter is exceeded, the data packet with a serial number N is discarded 1510, from the internal buffer of the access point. Further, the access point returns to its active state 1501.

If the internal counter N15 has not yet reached its maximum value N15_MAX, the access point keeps on listening to command messages from the control entity 20. After the expiration 1507 of the time span DT15, the access point checks 1508 whether the aforementioned command messages commanding retransmission of the data packet with the serial number N has been received 1508. The invention is not limited to the case the access point checks for command messages only after expiration of the timer. Reception of the command message might also happen during the time span DT15 without affecting the further method.

In the case no such command message is received by the access point from the control entity 20, the method depicted in Fig. 15 returns to step 1505. Due to this measure the internal timer DT15 is started again, and the internal counter N15 is increased by one. As a consequence, the access point waits for command messages N15_MAX times the delay time DT15.

In the case a command message commanding retransmission of data packet number N is received from the control entity 20, the access point retransmits 1509 the respective data packet number N to the mobile terminal 10. The method subsequently returns to listening 1503 to acknowledgement messages.

The advantage of the here presented embodiment is to avoid re-forwarding the same data packet (MUP PDU) from the control entity 20 to access point RAP2. In a network wherein the link between the control entity 20 and access point RAP2 is provided by a shared e.g. wired link, the traffic load on this specific wired link may be reduced.

Fig. 16 shows a flowchart of a method according to an exemplary embodiment of the invention that is executed by the access point preferably not comprising the control entity 20. The method is executed independent and parallel in time to the method presented in Fig. 15.

Starting at its active state 1601, the access point listens 1602 to polling messages sent from the control entity 20 to the respective access point. Upon reception of such a polling message, the access point transmits 1603 a report message to the control entity 20. The aforementioned report message indicates successful or unsuccessful delivery of data packets sent to the mobile terminal 10 from the respective access point. The information whether a data packet has been delivered successful or unsuccessful is based on the acknowledgement messages the access point has received from the mobile terminal 10. The report message includes information about the successful or unsuccessful delivery of the latest M data packets sent from the respective access point to the mobile terminal 10.

According to a further exemplary embodiment of the invention the report message may comprise only information on data packets that have been successfully delivered to the mobile terminal 10 or alternatively the report message may comprise only information on data packets that have been delivered unsuccessfully.

The aforementioned internal threshold values N15_MAX and M may be fixed values defined for the respective access point. They may be further sent by the control entity 20 or another network management entity to the respective access point at the beginning of a communication session.

According to another embodiment of the invention, a network is considered that comprises at least a first and second radio access node, the first and second radio access node employing respectively a first and a second radio access technology different from one another. As an example, the first radio access node is assumed to comprise a Multi Radio Unification (MUP) scheduler and a buffer, which may be a control entity as defined herein or e.g. a Node B. The second radio access node is assumed to be an IEEE 802.11 Access Point.

According to this embodiment, the second radio access node transmits data packets to a mobile terminal within the network. The mobile terminal transmits an acknowledgment message directly to the first radio access node that contains the MUP scheduler and buffer, and transmits a notification to the second radio access node indicating that it is transmitting the acknowledgment message directly to the first radio access node with the MUP scheduler and buffer.

It is assumed that the mobile terminal is not capable of transmitting simultaneously via more than one of the first and second radio access technology. Hence, the mobile terminal can transmit only via a single radio access technology at a given instant. Two different variants are thus foreseen within this embodiment that may be distinguished based on the chronological order used for sending the acknowledgement message to the first radio access node and the notification to the second radio access node about the transmission of this acknowledgement message.

In the first variant, the mobile terminal first transmits the notification to the second radio access node, notifying that it is transmitting the acknowledgment message directly to the first radio access node with the MUP scheduler and buffer. In this case, the delay for the acknowledgment transmission is increased, but this mechanism provides the advantage that the second radio access node gets a notification from the mobile terminal within the time window during which it was expecting an acknowledgment message from the mobile terminal. Hence, this mechanism allows for preventing the second radio access node from forwarding an acknowledgment message to the first radio access node with the MUP scheduler and buffer.

This first variant of this embodiment of the invention involves three changes in comparison to the operation of the controlling entity and the transmitting Access Point as defined in the previous embodiments of the invention. Firstly, the second radio access node without the controlling entity and the MUP buffer is prevented from forwarding any kind of information upon reception of such a notification from the mobile terminal. Secondly, there is no need to use the timer, as described in the previous embodiments of the invention and illustrated in Fig. 3, at the first radio access node with the MUP scheduler and buffer. Thirdly, the operation of the radio access point differs from the one described in the flowchart of Fig. 4.

In the second variant, the mobile terminal first transmits the acknowledgment message directly to the first radio access node with MUP scheduler and buffer and then transmits the notification to the second radio access node, from which the data packet transmission is originated. In this case, the acknowledgment message is transmitted without delay to the first radio access node with the MUP scheduler and buffer. However, the notification to the second radio access node might reach the second radio access node with delay. The underlying reason is that the mobile terminal has to switch from the technology of the first radio access node with the MUP buffer and scheduler to the technology of the second radio access node, in the present example assumed to be IEEE 802.11. Consequently, it is very likely that this notification reaches the second radio access node just after the end of the period over which the second radio access node is awaiting an acknowledgment message from the mobile terminal. Therefore, in this second variant, it is suggested to introduce a timer similar to the one illustrated in Fig. 3 at the second radio access node and not in the first radio access node with the MUP scheduler and buffer, as it was described in the previous embodiments of the invention. This second variant is more advantageous in case the priority is to transmit acknowledgment messages in a timely manner.

Hence, according to the first and second variant of this embodiment of the invention, modifications to the previous embodiments of the invention have to be made. First, a notification message is transmitted to the second radio access node, in case the acknowledgment message is transmitted by the mobile terminal to the first radio access node. Further, the behavior of the second radio access node in respect to the way it forwards information to the first radio access node with the MUP scheduler and buffer is modified. The timer at the first radio access node with MUP scheduler and buffer is removed and a new timer is introduced at the second radio access node. This new timer is designed in such a way that it is launched when the second radio access node has not received an acknowledgment message from the mobile terminal during the time window defined by the "Duration" field.

In order to tackle the problem when an NACK and an ACK for a single MUP PDU reach the access point comprising the controlling entity and MUP buffer, the previous embodiments of the invention presented herein suggest that the timer is located within the access point with the MUP buffer and the controlling entity. According to the second variant of this embodiment of the invention, it is suggested to have an additional timer at the second radio access node. In addition, the first and second variants of this embodiment suggest that the mobile terminal transmits a notification to the second radio access node just after the acknowledgement message transmission directly to the first radio access node with the MUP buffer.

In the following, the necessary changes in the IEEE 802.11 MAC protocol operation are outlined. First, the MAC protocol has to be modified in such a way that a primitive is transmitted from MUP to MAC to inform MAC about the MUP-enabled mobile terminals. Then, when the second radio access node reserves the channel for the transmission to a mobile terminal that is MUP-enabled, it reserves the channel for the data transmission to the mobile terminal and for the acknowledgment transmission from the mobile terminal to the second radio access node.

According to the first and second variants of this embodiment, it is also suggested to change the operation of the mobile terminal that is in simultaneous connection to different radio access nodes. Indeed, according to this variant, the mobile terminal, upon reception of a MAC PDU from the second radio access node, if the decision is to transmit an acknowledgement message to the first radio access node, switches its operation to the technology of the first radio access node and transmits directly the acknowledgement message to the first radio access node with the MUP buffer. In addition, the mobile terminal switches back to the technology of the second radio access node and transmits a notification to the second radio access node.

In terms of gains, the previous embodiments of the invention are more appropriate for the case where the second radio access node is heavily loaded and the load in the wired connection is not an important issue. On the other hand, the first and second variants of this embodiment of the invention are more appropriate for the case where the second radio access node is not that heavily loaded, so that it is not critical to transmit an additional signaling message, i.e. the notification, over the air and the fast synchronized wired connection is heavily loaded.

It will be apparent to a person skilled in the art that the wired connection may be replaced by a wireless link in case of ad hoc, or mesh networks.

In addition, the previous embodiments of the invention suggested herein are more advantageous in the case of an erroneous downlink packet data transmission, whilst the first and second variant of this embodiment are more advantageous for the case of a non-erroneous data transmission. Indeed, in case of the previous embodiments of this invention, it may happen that an NACK is forwarded from the second radio access node to the first radio access node via the synchronized fast wired connection, even when the downlink transmission to the mobile terminal is not erroneous.

This problem may be avoided according to the second variant of the embodiment of the invention, since the timer is located at the second radio access node so that the second radio access node gets a notification on whether the acknowledgment message is transmitted via the first radio access node. The second radio access node sets an additional predetermined time period upon receiving no acknowledgement message from the mobile terminal within the time window defined by the "Duration" field. The second radio access node then determines that the data packet transmission to the mobile terminal was unsuccessful when no acknowledgement message is received by the second radio access node from the mobile terminal within the set predetermined time period, and a notification has been received by the second radio access node from the mobile terminal.

Upon determining that the transmission was indeed unsuccessful, the second radio access node thus transmits a negative acknowledgment message NACK to the first radio access node indicating that the respective data packet has not been received by the mobile terminal. Hence, this mechanism according to the second variant of this embodiment allows the second radio access node, once it has received the notification, to forward a negative acknowledgement message NACK to the first radio access node with the MUP buffer only in the case that the transmission to the mobile terminal was erroneous.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

**1.** A method for transmitting data packets in a network, wherein the network comprises a control entity, at least one mobile terminal and at least a first and a second access point, the method comprising the following steps performed by the control entity:

transmitting data packets to the mobile terminal, and
for a respective data packet that has been transmitted, transmitting a retransmission packet to the mobile terminal in case:

a) an acknowledgement message indicating the unsuccessful delivery of the respective transmitted data packet is received via the first access point, or
b) an acknowledgement message indicating the unsuccessful delivery of the respective data packet is received via the second access point and no acknowledgement message indicating successful delivery of the respective data packet has been received or is received via the first access point within a certain time period after reception of the acknowledgement message via the second access point.

**2.** The method according to claim 1, wherein only acknowledgement messages indicating the unsuccessful delivery and no acknowledgement message indicating the successful delivery of the respective data packet are received from the second access point.

**3.** A method for transmitting data packets in a network, wherein the network comprises a control entity, at least one mobile terminal and at least a first and a second access point, the method comprising the following steps performed by the control entity:

transmitting data packets to the mobile terminal via the second access point, and
for a respective data packet that has been transmitted, transmitting a retransmission packet to the mobile terminal in case:

a) an acknowledgement message indicating the unsuccessful delivery of the respective transmitted data packet is received via the first access point, or
b) no acknowledgement message indicating the successful delivery of the respective data packet is received via the second access point or is received via the first access point within a certain time period.

**4.** The method according to claim 3, wherein only acknowledgement message indicating the successful delivery and no acknowledgement message indicating the unsuccessful delivery of the respective data packet are received from the second access point.

**5.** The method according to one of claims 1 to 4 further comprising the steps of:

receiving a report message from the second access point indicating whether at least a part of the transmitted data packets have each been delivered successfully or unsuccessfully to the mobile terminal, and
for a respective one of the part of data packets for which the report message indicates its unsuccessful delivery, retransmitting the respective data packet to the mobile terminal.

**6.** The method according to claims 5 further comprising the step of transmitting a polling message to the second access point in case no acknowledgement message is received via the first access point and no acknowledgement message is received via the second access point within a certain time period, wherein the report message is received in response to the polling message.

**7.** The method according to claim 6, further comprising the steps of maintaining a transmission window and determining a threshold parameter indicative to the number of packets within the transmission window that are left to send, and transmitting a polling message in case the threshold parameter is exceeded.

**8.** The method according to claim 7, wherein the threshold parameter is a value proportional to the quotient of the difference of the sequence number of the next data packet to be sent and the highest sequence number in transmission window and the total number of data packets in the transmission window.

**9.** The method according to claim 7 or 8, wherein said retransmission window is the retransmission window of a link layer buffer located in the control entity, controlled by a Multi Radio Unification Protocol (MUP).

**10.** The method for retransmitting data packets in a network according to one of claims 6 to 9, wherein the step of transmitting the polling messages is repeated a predetermined number of times, if no report message is received in response to the respective polling message within a predetermined time period.

**11.** The method according to one of claims 1 to 10, wherein in case a) or b) the data packet is retransmitted by determining whether said data packet has been already transmitted to the mobile terminal via the second access point, if so, transmitting a command message to said second access point, commanding the retransmission of said data packet from the second access point to the mobile terminal, and

if not, retransmitting said data packet via the second access point to the mobile terminal.

**12.** The method according to one of claims 1 to 11, wherein the acknowledgement message indicating unsuccessful delivery of the data packet received from the second access point is generated by said second access point, and the second access point is an IEEE 802.11 access point.

**13.** The method according to one of claims 1 to 11, wherein the first and second access point and the mobile terminal are implementing a Multi Radio Unification Protocol (MUP).

**14.** A method for forwarding data packets in a network, wherein the network comprises a control entity, at least one mobile terminal and at least an access point, the method comprising the following steps performed by the access point:

receiving a data packet from the control entity,
buffering the respective data packet, and
transmitting the respective data packet to the mobile terminal, and
in the case an acknowledgement message indicating that the respective data packet has been transmitted unsuccessfully is received, forwarding the acknowledgement message to the control entity. and
retransmitting the respective buffered data packet to the mobile terminal upon reception of a command message commanding retransmission of the respective data packet from the control entity.

**15.** A method for forwarding data packets in a network, wherein the network comprises a control entity, at least one mobile terminal and at least an access point, the method comprising the following steps performed by the access point:

receiving a data packet from the control entity,
buffering the respective data packet, and
transmitting the respective data packet to the mobile terminal, and
in the case an acknowledgement message indicating that the respective data packet has been transmitted successfully is received, forwarding the acknowledgement message to the control entity, and
retransmitting the respective buffered data packet to the mobile terminal upon reception of a command message commanding retransmission of the respective data packet from the control entity.

**16.** The method according to claims 14 or 15, further comprising the step of deleting a respective buffered data packet in case

a. no command message, commanding retransmission of said data packet to the mobile terminal, is received from the control entity or is received within a certain time period
b. no acknowledgement message indicating the successful transmission of data packets to the mobile terminal for the respective data packet is received within a certain time period
c. no acknowledgement message is received from mobile terminal or is received within a certain time period.

**17.** The method according to one of claims 14 to 16, further comprising the step of storing acknowledgement messages indicating the successful or unsuccessful transmission of data packets to the mobile terminal, and transmitting a report message to the control entity indicating the successful or unsuccessful transmission of the data packets from the access point to the mobile terminal.

**18.** The method according to claim 17, wherein the step of transmitting a report message is performed in response to reception of a polling message or periodically.

**19.** The method according to one of claims 14 to 18, wherein the acknowledgement message indicating unsuccessful delivery of the data packet is generated by the access point, and the access point is an IEEE 802.11 access point.

**20.** The method according to one of claims 14 to 19, wherein the access point and the mobile terminal are implementing a Multi Radio Unification Protocol (MUP).

**21.** A control entity in a network further comprising at least one mobile terminal and at least a first and a second access point, the control entity comprising:

a transmitter for sending data packets to the mobile terminal, and

a receiver for receiving acknowledgement messages from the mobile terminal, and
a processor causing the transmitter to send a retransmission packet, associated to the respective data packet that has been transmitted to the mobile terminal, in case:

a) an acknowledgement message indicating the unsuccessful delivery of the respective transmitted data packet is received via the first access point, or
b) an acknowledgement message indicating the unsuccessful delivery of the respective data packet is received via the second access point and no acknowledgement message indicating successful delivery of the respective data packet has been received or is received via the first access point within a certain time period after reception of the acknowledgement message via the second access point.

**22.** The control entity according to claim 21, wherein only acknowledgement messages indicating the unsuccessful delivery and no acknowledgement message indicating the successful delivery of the respective data packet are received from the second access point.

**23.** A control entity in a network further comprising at least one mobile terminal and at least a first and a second access point, the control entity comprising:

a transmitter for sending data packets via the second access point to the mobile terminal, and
a receiver for receiving acknowledgement messages from the mobile terminal, and:

a processor causing the transmitter to send a retransmission packet, associated to the respective data packet that has been transmitted to the mobile terminal, in case:

a) an acknowledgement message indicating the unsuccessful delivery of the respective transmitted data packet is received via the first access point, or
b) no acknowledgement message indicating the successful delivery of the respective data packet is received via the second access point or is received via the first access point within a certain time period.

**24.** The control entity according to claim 23, wherein only acknowledgement message indicating the successful delivery and no acknowledgement message indicating the unsuccessful delivery of the respective data packet are received from the second access point.

**25.** The control entity according to one of claims 21 to 24, further adapted to perform the method steps according to one of claims 5 to 13.

**26.** An access point in a network further comprising a control entity, at least one mobile terminal, the access point comprising:

a receiver for receiving a data packet from the control entity,
a buffer for buffering the respective data packet, and
a transmitter for transmitting the respective data packet to the mobile terminal, and
a processor, causing the transmitter to forward an acknowledgement message to the control entity in the case an acknowledgement message indicating that the respective data packet has been transmitted unsuccessfully is received,
the processor being further adapted to cause the transmitter to retransmit the respective buffered data packet to the mobile terminal upon reception of a command message commanding retransmission of the respective data packet from the control entity.

**27.** An access point in a network further comprising a control entity, at least one mobile terminal, the access point comprising
a receiver for receiving a data packet from the control entity,
a buffer for buffering the respective data packet, and
transmitter for transmitting the respective data packet to the mobile terminal, and
a processor causing the transmitter to forward an acknowledgement message to the control entity in the case an acknowledgement message indicating that the respective data packet has been transmitted successfully is received,
the processor further being adapted to cause the transmitter to retransmit the respective buffered data packet to the mobile terminal upon reception of a command message commanding retransmission of the respective data packet from the control entity.

**28.** The access point according to claim 26 or 27, further adapted to perform the steps of claims 16-20.

**29.** A system comprising a control entity accord to one of claims 21 to 25 and an access point according to one of claims 26 to 28 and at least one mobile terminal.

**30.** A method for transmitting data packets to a mobile terminal via a network, comprising at least a first and second radio access node, the first and second radio access node employing respectively a first and a second radio access technology different from one another, and the method comprising the following steps:

transmitting, by the second radio access node, data packets to the mobile terminal,
transmitting, by the mobile terminal, an acknowledgement message to the first radio access node, said acknowledgement message comprising information on a delivery of the respective data packet at the mobile terminal, and
notifying, by the mobile terminal, the second radio access node about the transmission of the acknowledgement message to the first radio access node before transmitting the acknowledgement message to the first radio access node.

**31.** A method for transmitting data packets to a mobile terminal via a network, comprising at least a first and second radio access node, the first and second radio access node employing respectively a first and a second radio access technology different from one another, and the method comprising the following steps:

transmitting, by the second radio access node, data packets to the mobile terminal,
transmitting, by the mobile terminal, an acknowledgement message to the first radio access node, said acknowledgement message comprising information on a delivery of the respective data packet at the mobile terminal, and
notifying, by the mobile terminal, the second radio access node about the transmission of the acknowledgement message to the first radio access node after having transmitted the acknowledgement message to the first radio access node.

**32.** The method according to one of claims 30 or 31, further comprising setting, by the second radio access node, a predetermined time period upon receiving no acknowledgement message from the mobile terminal, determining, by the second radio access node, that the respective data packet has not been received by the mobile terminal when no acknowledgement message is received by the second radio access node from the mobile terminal within the set predetermined time period and a notification has been received by the second radio access node from the mobile terminal, and
transmitting, by the second radio access node, a negative acknowledgment message to the first radio access node indicating that the respective data packet has not been received by the mobile terminal.

**33.** A method for receiving data packets via a network, comprising at least a first and second radio access node, the first and second radio access node employing respectively a first and a second radio access technology different from one another, said method comprising the following steps performed by a mobile terminal:

receiving data packets from the second radio access node,
notifying the second radio access node about a transmission of an acknowledgement message to the first radio access node, said acknowledgement message comprising information on a delivery of the respective data packet at the mobile terminal,
switching from the second radio access technology to the first radio access technology, and
transmitting the acknowledgement message to the first radio access node.

**34.** A method for receiving data packets via a network, comprising at least a first and second radio access node, the first and second radio access node employing respectively a first and a second radio access technology different from one another, said method comprising the following steps performed by a mobile terminal:

receiving data packets from the second radio access node,
switching from the second radio access technology to the first radio access technology,
transmitting an acknowledgement message to the first radio access node, said acknowledgement message comprising information on a delivery of the respective data packet at the mobile terminal,
switching back from the first radio access technology to the second radio access technology, and

notifying the second radio access node about the transmission of the acknowledgement message to the first radio access node.

**35.** The method according to one of claims 30 to 34, wherein the first radio access node is a controlling entity of the network and the second radio access node is an IEEE 802.11 access point.

**36.** A system comprising a mobile terminal and a network comprising at least a first and second radio access node, the first and second radio access node employing respectively a first and a second radio access technology different from one another, wherein
the second radio access node is adapted to transmit data packets to the mobile terminal,
the mobile terminal comprises transmitting means for transmitting an acknowledgement message to the first radio access node, said acknowledgement message comprising information on a delivery of the respective data packet at the mobile terminal, and
the mobile terminal comprises notifying means for notifying the second radio access node about the transmission of the acknowledgement message to the first radio access node before transmitting the acknowledgement message to the first radio access node.

**37.** A system comprising a mobile terminal and a network comprising at least a first and second radio access node, the first and second radio access node employing respectively a first and a second radio access technology different from one another, wherein
the second radio access node is adapted to transmit data packets to the mobile terminal,
the mobile terminal comprises transmitting means for transmitting an acknowledgement message to the first radio access node, said acknowledgement message comprising information on a delivery of the respective data packet at the mobile terminal, and
the mobile terminal comprises notifying means for notifying the second radio access node about the transmission of the acknowledgement message to the first radio access node after having transmitted the acknowledgement message to the first radio access node.

**38.** The system according to one of claims 36 or 37, wherein the second radio access node further comprises setting means for setting a predetermined time period upon receiving no acknowledgement message from the mobile terminal,
determining means for determining that the respective data packet has not been received by the mobile terminal when no acknowledgement message is received by the second radio access node from the mobile terminal within the set predetermined time period and a notification has been received by the second radio access node from the mobile terminal, and
transmitting means for transmitting a negative acknowledgment message to the first radio access node indicating that the respective data packet has not been received by the mobile terminal.

**39.** A mobile terminal adapted to receive data packets via a network, said network comprising at least a first and second radio access node, the first and second radio access node employing respectively a first and a second radio access technology different from one another, said mobile terminal comprising:

receiving means for receiving data packets from the second radio access node,
notifying means for notifying the second radio access node about a transmission of an acknowledgement message to the first radio access node, said acknowledgement message comprising information on a delivery of the respective data packet at the mobile terminal,
switching means for switching from the second radio access technology to the first radio access technology, and
transmitting means for transmitting the acknowledgement message to the first radio access node.

**40.** A mobile terminal adapted to receive data packets via a network, said network comprising at least a first and second radio access node, the first and second radio access node employing respectively a first and a second radio access technology different from one another, said mobile terminal comprising:

receiving means for receiving data packets from the second radio access node,
switching means for switching from the second radio access technology to the first radio access technology and switching back from the first radio access technology to the second radio access technology,
transmitting means for transmitting an acknowledgement message to the first radio access node, said acknowledgement message comprising information on a delivery of the respective data packet at the mobile terminal, and

notifying means for notifying the second radio access node about the transmission of the acknowledgement message to the first radio access node.

Fig. 1

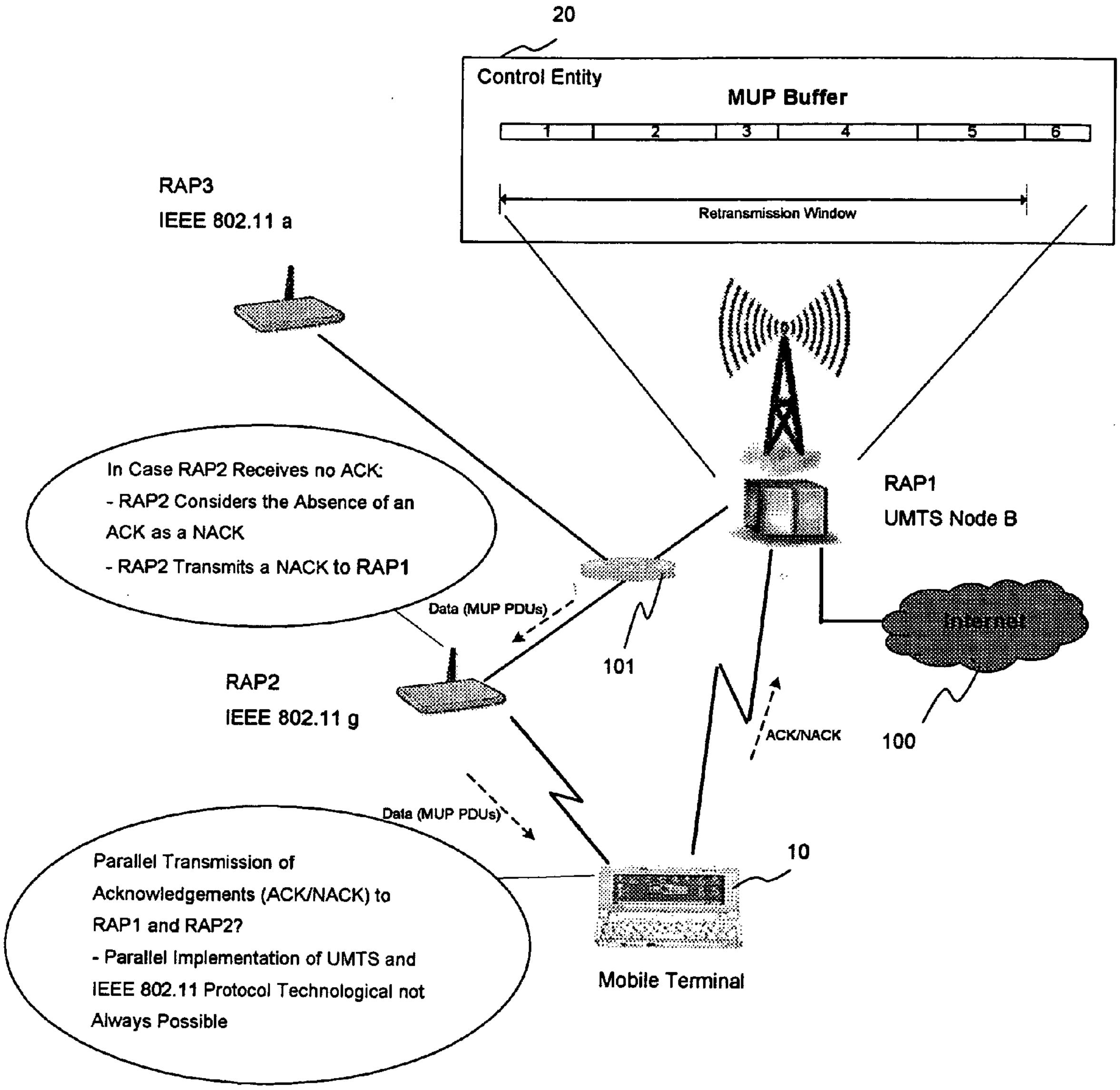
20
Control Entity
MUP Buffer
1
2
3
4
5
6
Retransmission Window
RAP3
IEEE 802.11 a
In Case RAP2 Receives no ACK:
- RAP2 Considers the Absence of an ACK as a NACK
- RAP2 Transmits a NACK to RAP1
Data (MUP PDUs)
RAP1
UMTS Node B
Internet
101
RAP2
IEEE 802.11 g
ACK/NACK
100
Data (MUP PDUs)
10
Parallel Transmission of Acknowledgements (ACK/NACK) to RAP1 and RAP2?
- Parallel Implementation of UMTS and IEEE 802.11 Protocol Technological not Always Possible
Mobile Terminal

Fig. 2

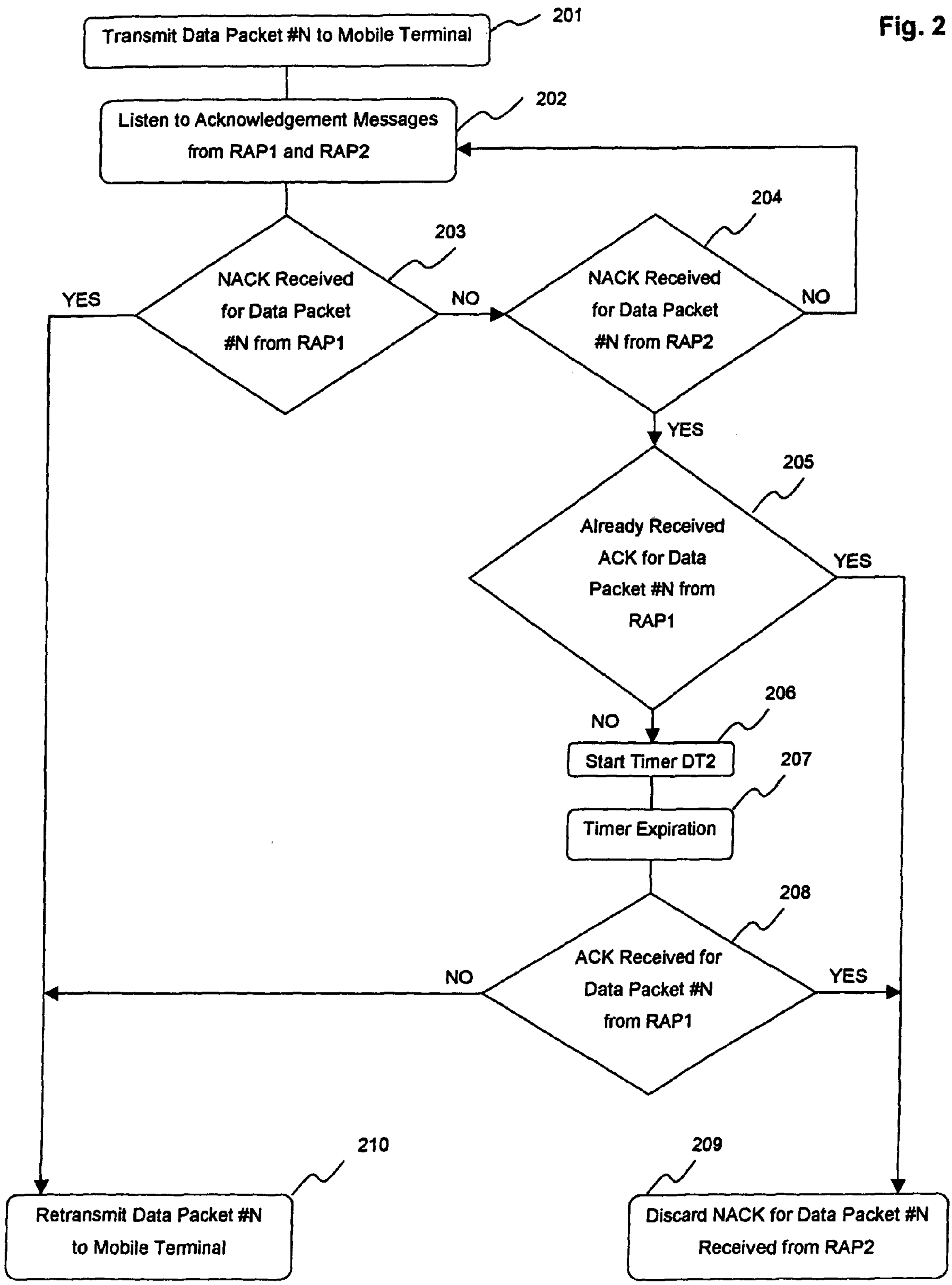
Transmit Data Packet #N to Mobile Terminal
201
Listen to Acknowledgement Messages from RAP1 and RAP2
202
NACK Received for Data Packet #N from RAP1
203
YES
NO
NACK Received for Data Packet #N from RAP2
204
NO
YES
Already Received ACK for Data Packet #N from RAP1
205
YES
NO
Start Timer DT2
206
Timer Expiration
207
ACK Received for Data Packet #N from RAP1
208
NO
YES
Retransmit Data Packet #N to Mobile Terminal
210
Discard NACK for Data Packet #N Received from RAP2
209

Fig. 3

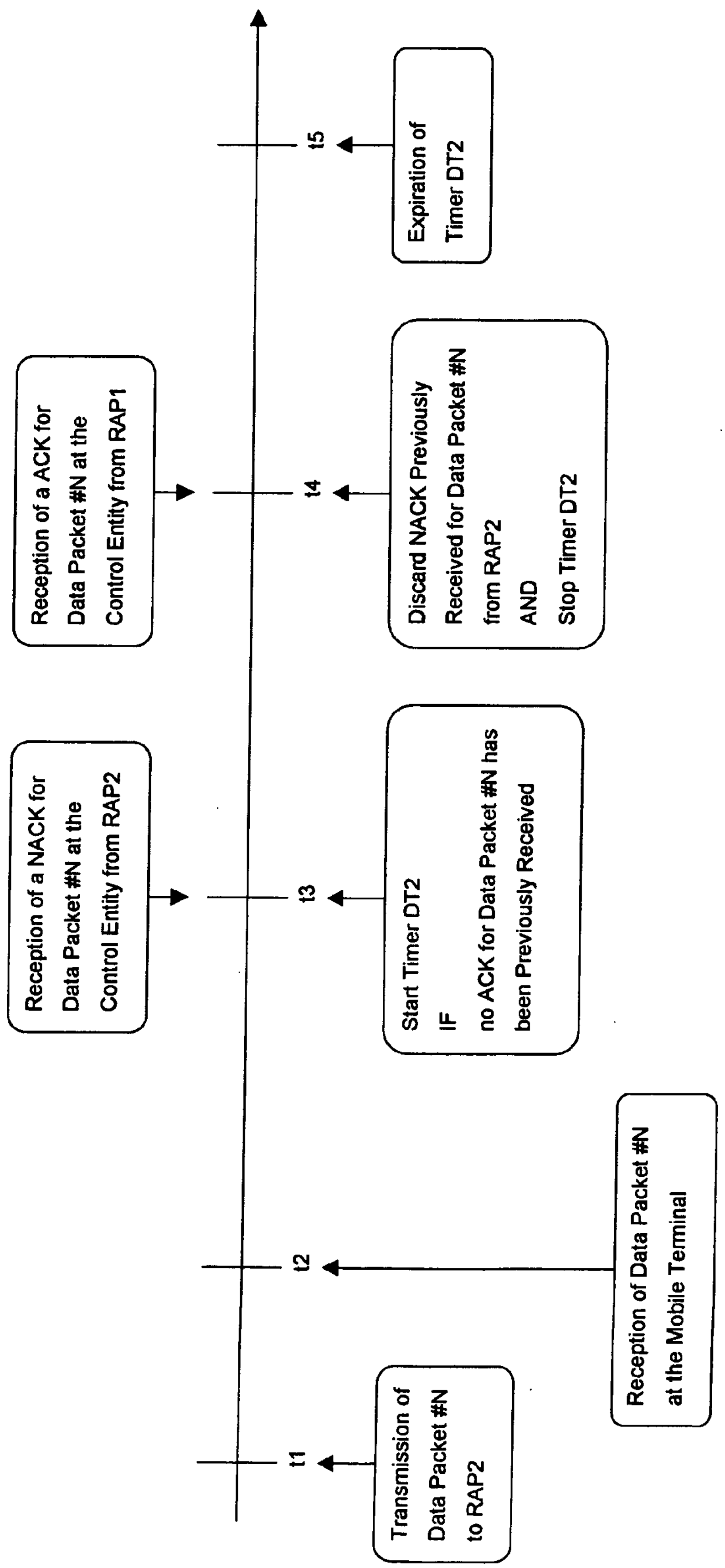
t1
Transmission of Data Packet #N to RAP2
t2
Reception of Data Packet #N at the Mobile Terminal
t3
Reception of a NACK for Data Packet #N at the Control Entity from RAP2
Start Timer DT2
IF
no ACK for Data Packet #N has been Previously Received
t4
Reception of a ACK for Data Packet #N at the Control Entity from RAP1
Discard NACK Previously Received for Data Packet #N from RAP2
AND
Stop Timer DT2
t5
Expiration of Timer DT2

Fig. 4

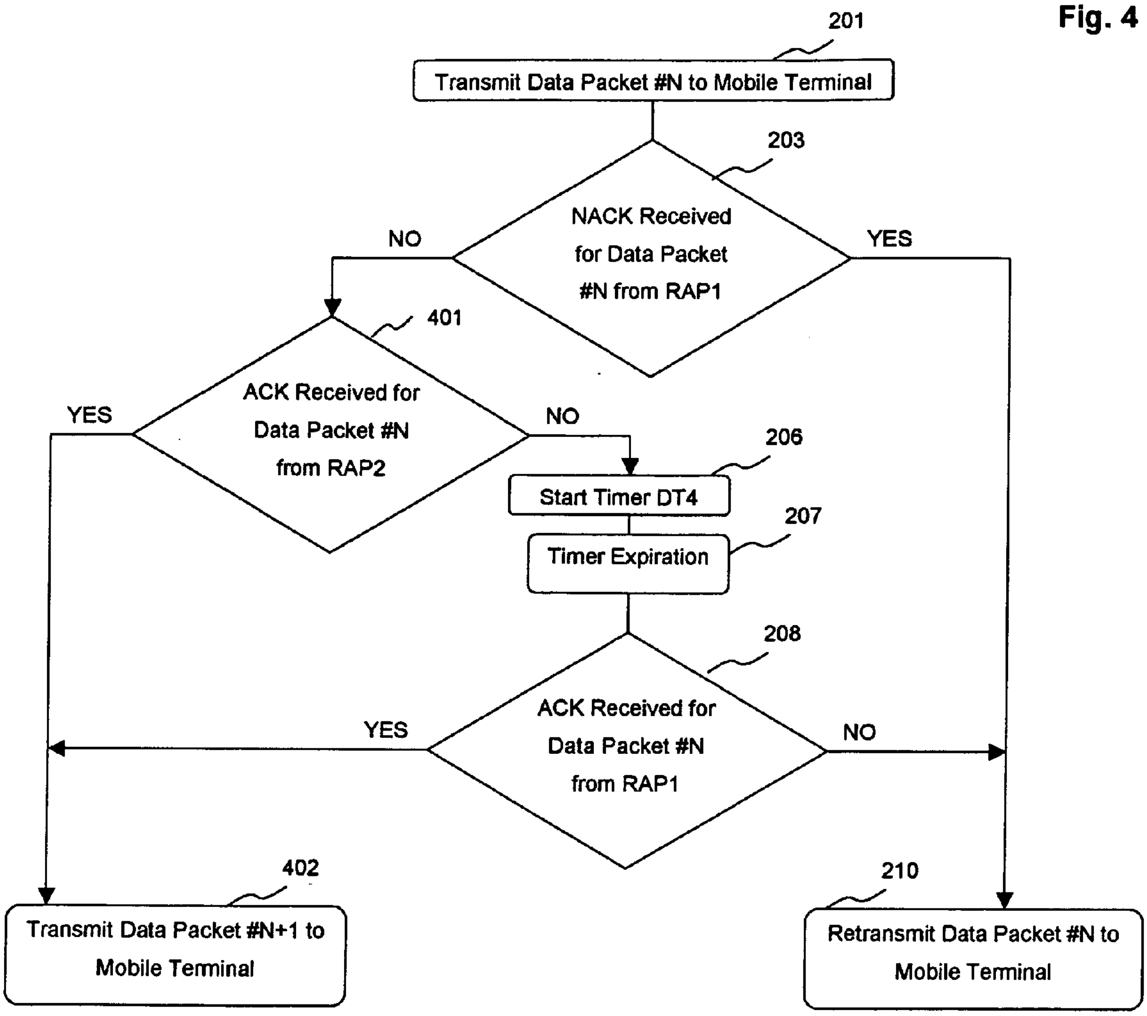
201
Transmit Data Packet #N to Mobile Terminal
203
NACK Received for Data Packet #N from RAP1
NO
YES
401
ACK Received for Data Packet #N from RAP2
YES
NO
206
Start Timer DT4
207
Timer Expiration
208
ACK Received for Data Packet #N from RAP1
YES
NO
402
Transmit Data Packet #N+1 to Mobile Terminal
210
Retransmit Data Packet #N to Mobile Terminal

Fig. 5

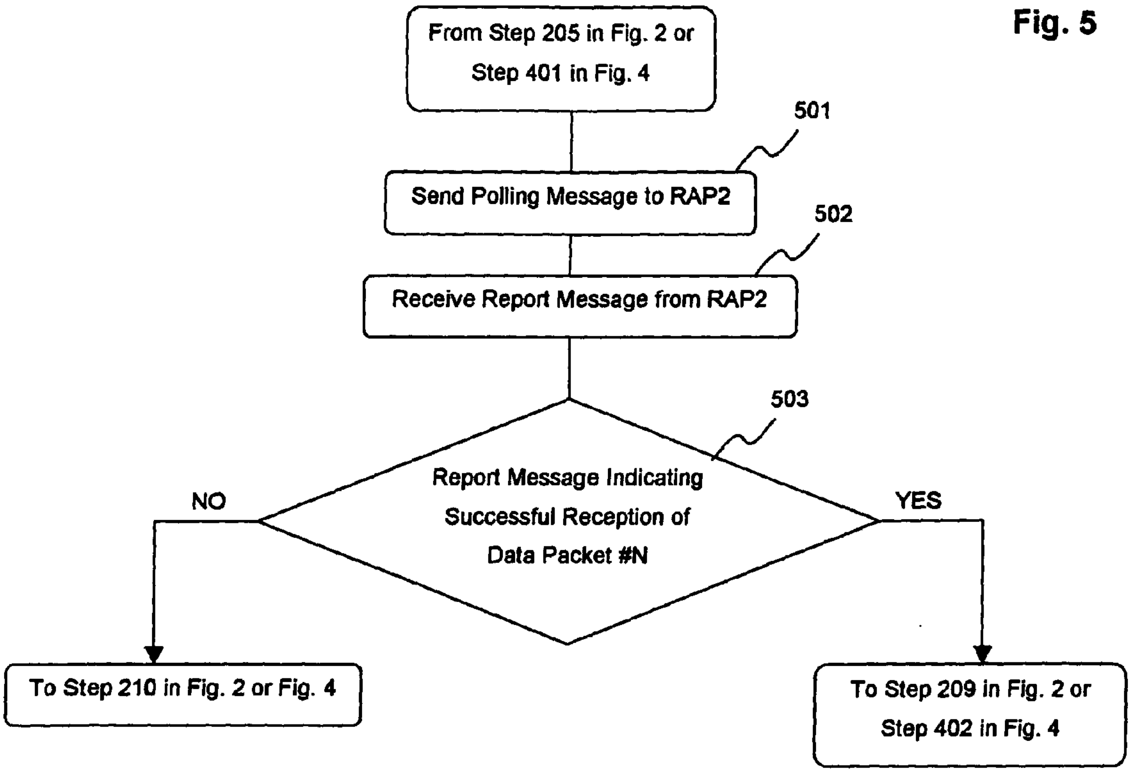
From Step 205 in Fig. 2 or
Step 401 in Fig. 4
501
Send Polling Message to RAP2
502
Receive Report Message from RAP2
503
Report Message Indicating
Successful Reception of
Data Packet #N
NO
YES
To Step 210 in Fig. 2 or Fig. 4
To Step 209 in Fig. 2 or
Step 402 in Fig. 4

Fig. 6

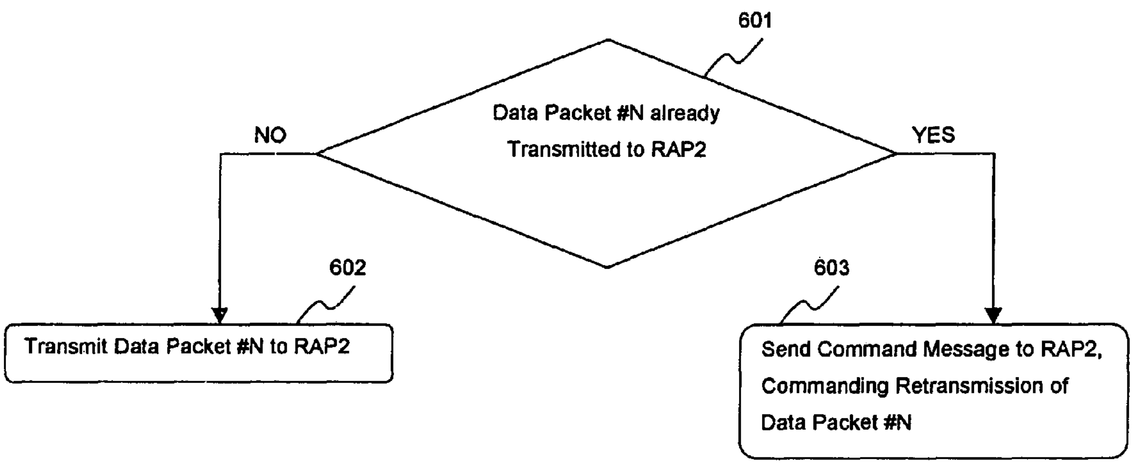
601
Data Packet #N already Transmitted to RAP2
NO
YES
602
603
Transmit Data Packet #N to RAP2
Send Command Message to RAP2, Commanding Retransmission of Data Packet #N

Fig. 7

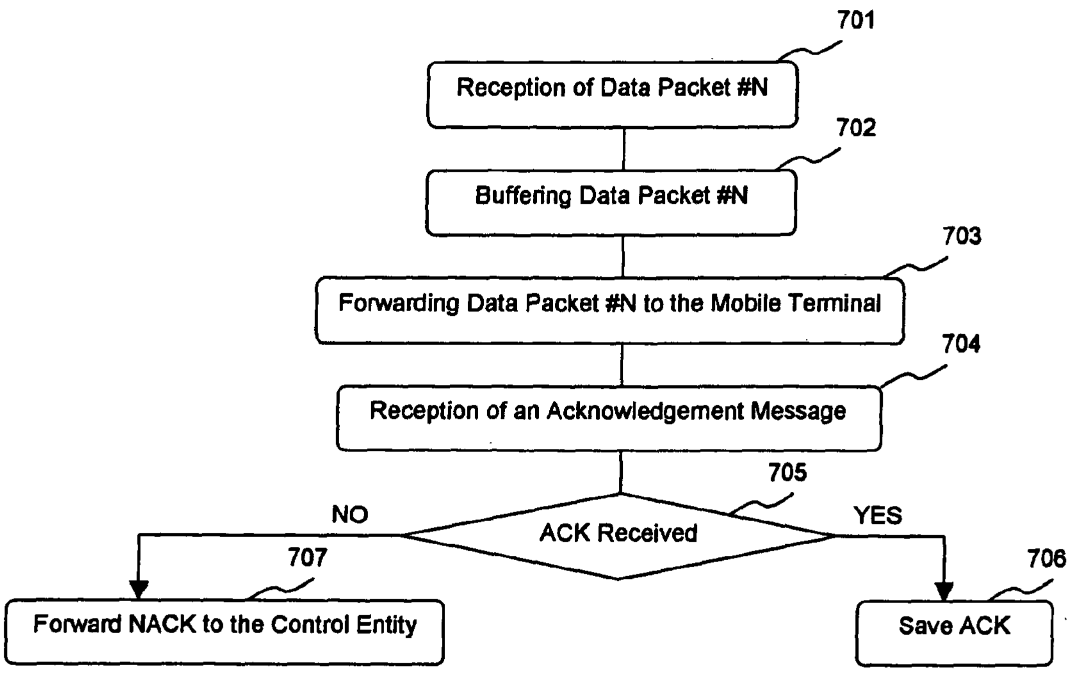
701
Reception of Data Packet #N
702
Buffering Data Packet #N
703
Forwarding Data Packet #N to the Mobile Terminal
704
Reception of an Acknowledgement Message
705
ACK Received
NO
YES
707
Forward NACK to the Control Entity
706
Save ACK

Fig. 8

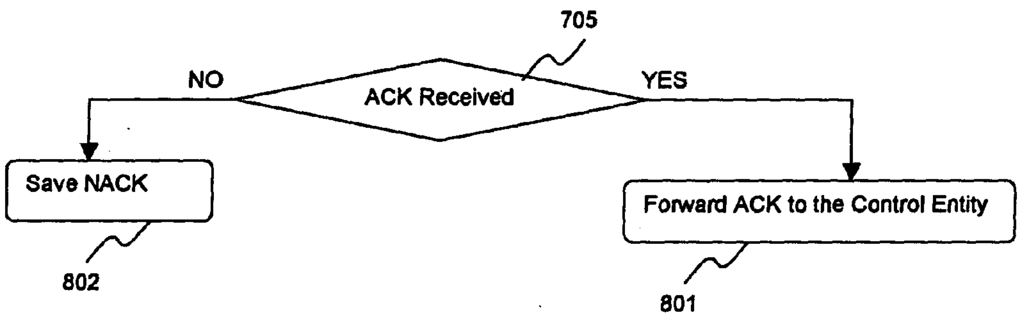
705
NO
ACK Received
YES
Save NACK
Forward ACK to the Control Entity
802
801

Fig. 9

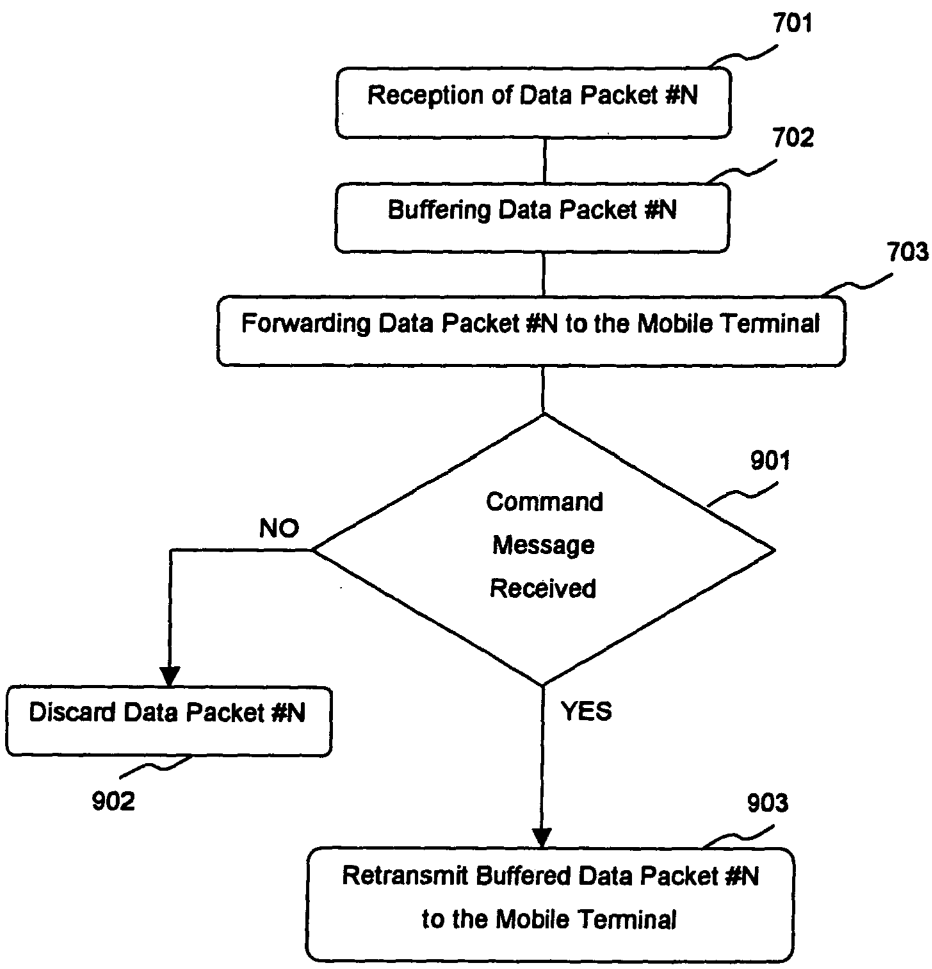
701
Reception of Data Packet #N
702
Buffering Data Packet #N
703
Forwarding Data Packet #N to the Mobile Terminal
901
Command
Message
Received
NO
YES
Discard Data Packet #N
902
903
Retransmit Buffered Data Packet #N
to the Mobile Terminal

Fig. 10

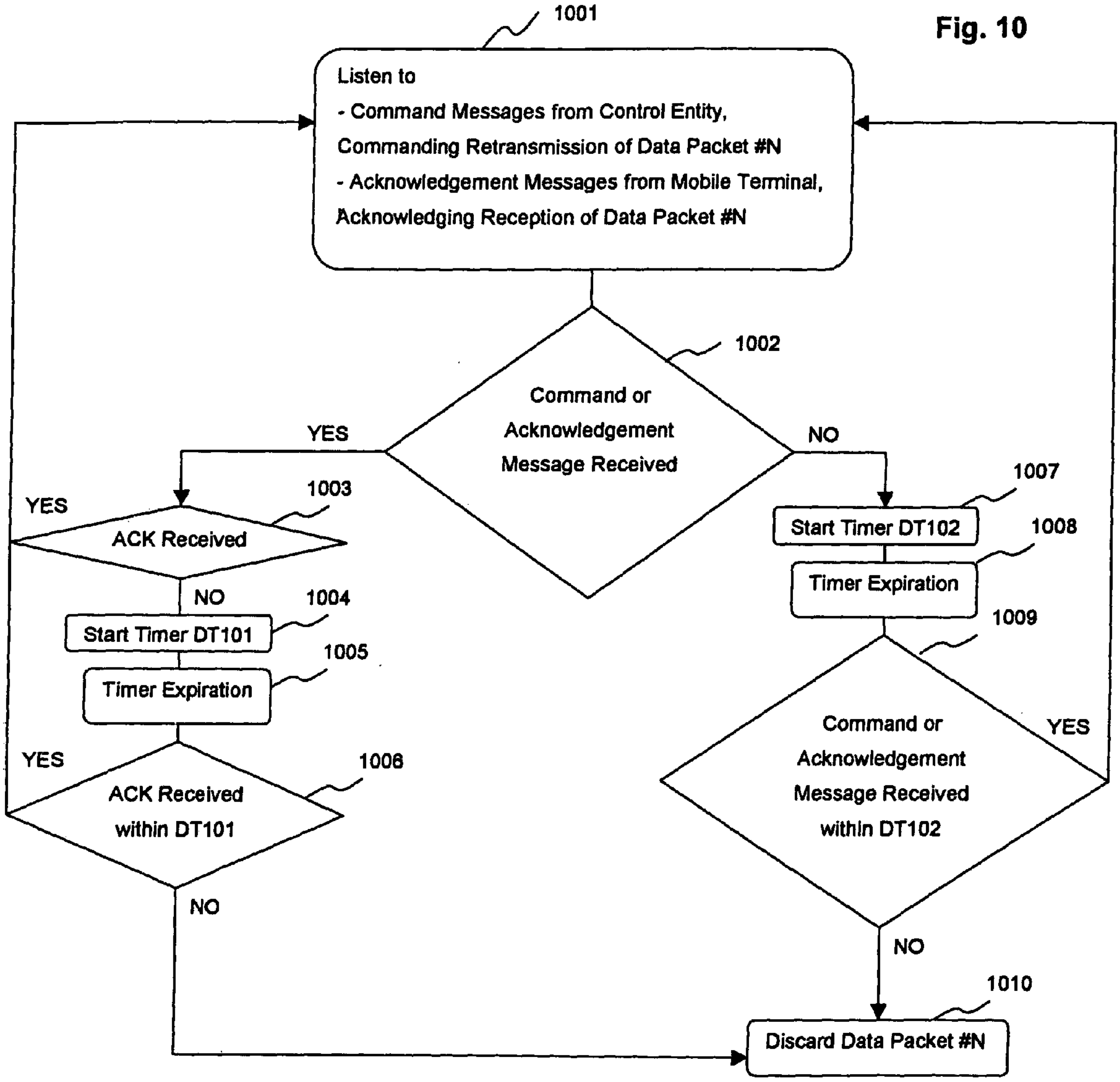
1001
Listen to
- Command Messages from Control Entity, Commanding Retransmission of Data Packet #N
- Acknowledgement Messages from Mobile Terminal, Acknowledging Reception of Data Packet #N
1002
Command or Acknowledgement Message Received
YES
NO
1003
ACK Received
YES
NO
1004
Start Timer DT101
1005
Timer Expiration
1006
ACK Received within DT101
YES
NO
1007
Start Timer DT102
1008
Timer Expiration
1009
Command or Acknowledgement Message Received within DT102
YES
NO
1010
Discard Data Packet #N

Fig. 11

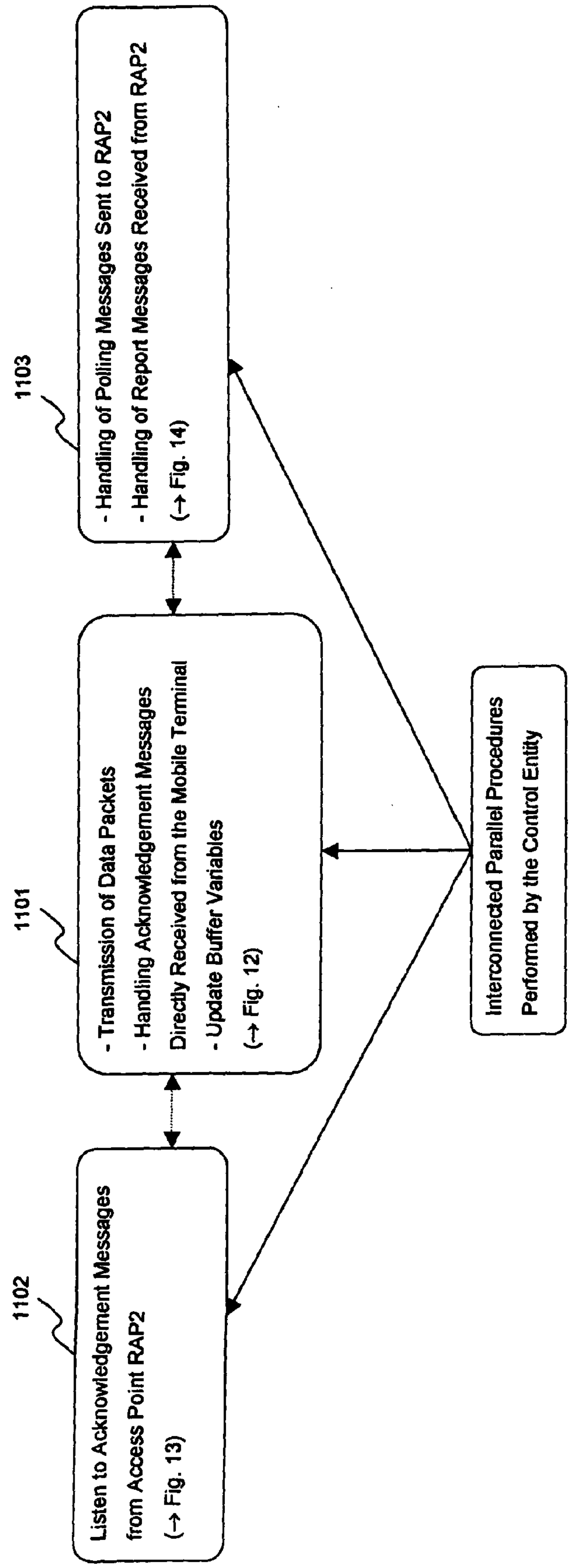
1103
- Handling of Polling Messages Sent to RAP2
- Handling of Report Messages Received from RAP2
(→ Fig. 14)
1101
- Transmission of Data Packets
- Handling Acknowledgement Messages
Directly Received from the Mobile Terminal
- Update Buffer Variables
(→ Fig. 12)
1102
Listen to Acknowledgement Messages
from Access Point RAP2
(→ Fig. 13)
Interconnected Parallel Procedures
Performed by the Control Entity

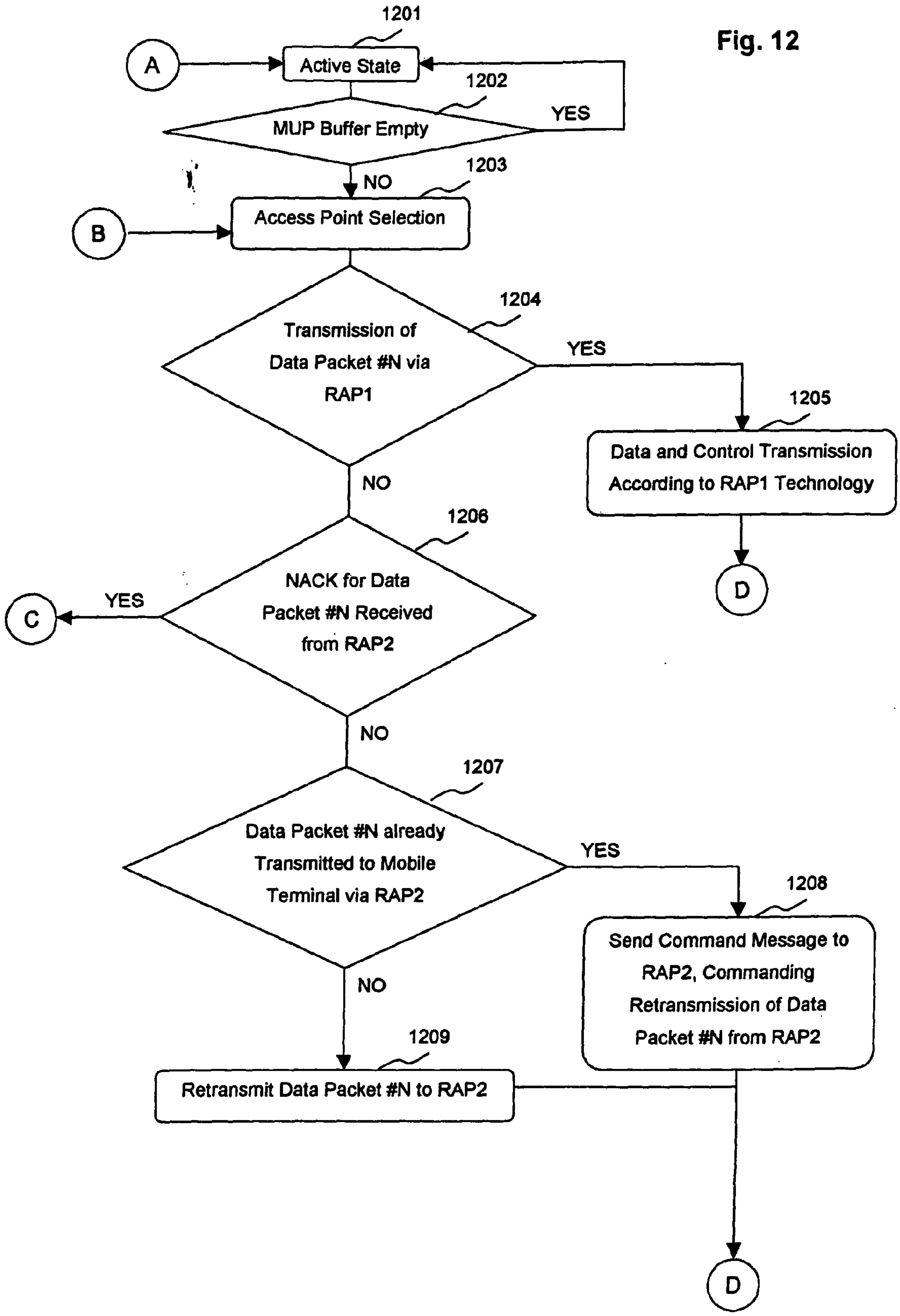
1201
A
Active State
1202
MUP Buffer Empty
YES
NO
1203
B
Access Point Selection
1204
Transmission of Data Packet #N via RAP1
YES
1205
Data and Control Transmission According to RAP1 Technology
D
NO
1206
NACK for Data Packet #N Received from RAP2
YES
C
NO
1207
Data Packet #N already Transmitted to Mobile Terminal via RAP2
YES
1208
Send Command Message to RAP2, Commanding Retransmission of Data Packet #N from RAP2
NO
1209
Retransmit Data Packet #N to RAP2
D

Fig. 12

Fig. 13

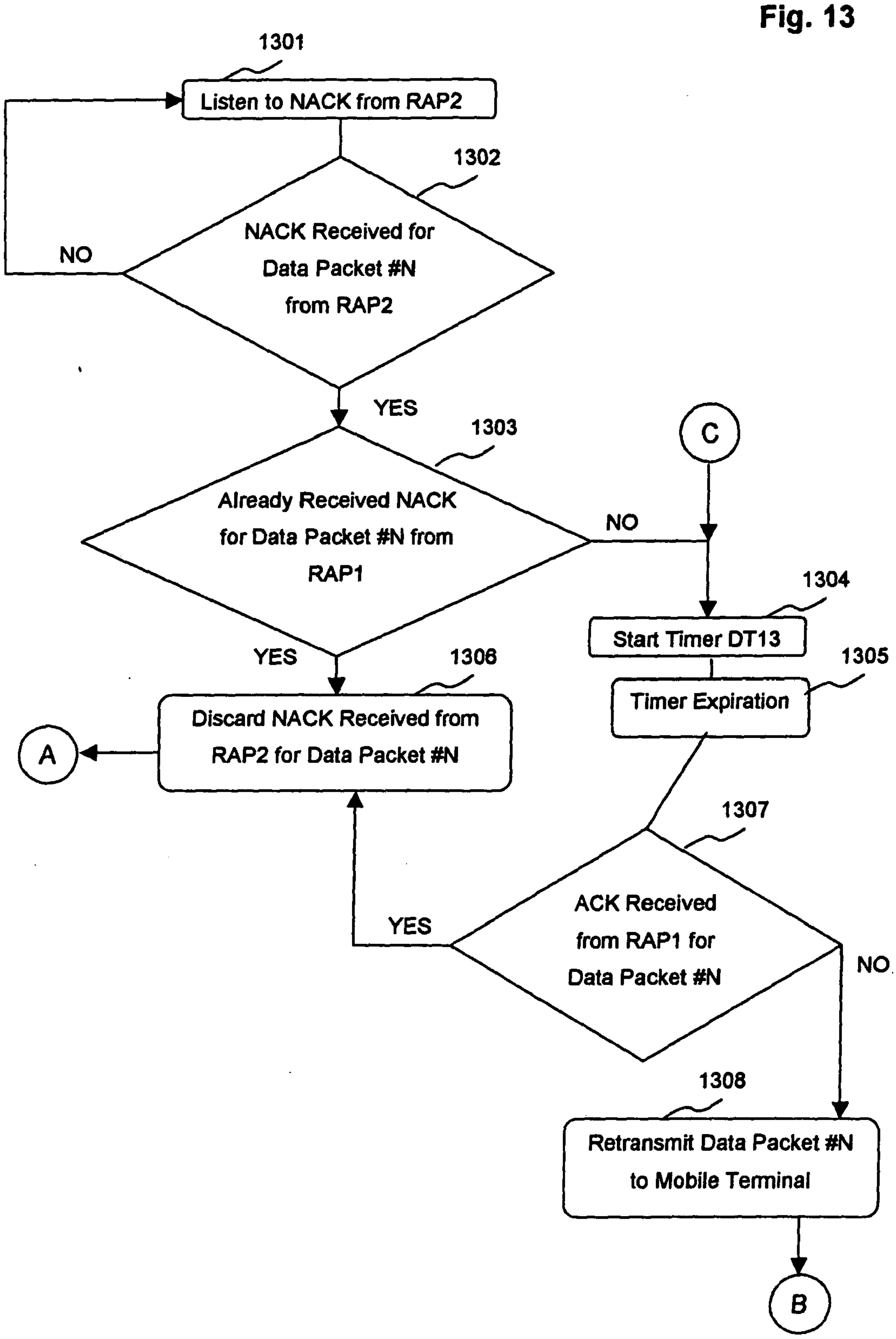
1301
Listen to NACK from RAP2
1302
NACK Received for Data Packet #N from RAP2
NO
YES
1303
Already Received NACK for Data Packet #N from RAP1
NO
C
1304
Start Timer DT13
1305
Timer Expiration
YES
1306
Discard NACK Received from RAP2 for Data Packet #N
A
1307
ACK Received from RAP1 for Data Packet #N
YES
NO
1308
Retransmit Data Packet #N to Mobile Terminal
B

Fig. 14

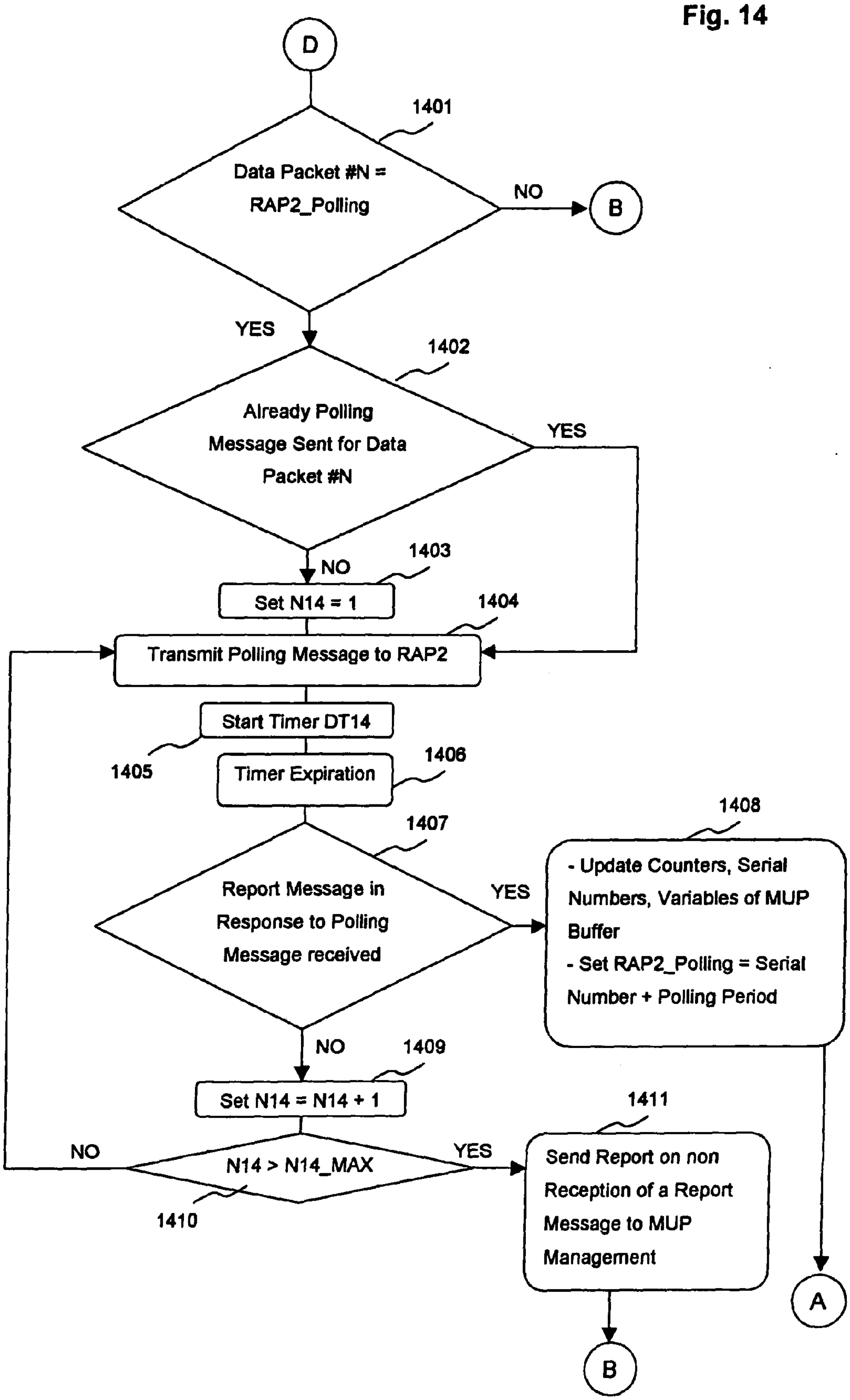
D
1401
Data Packet #N = RAP2_Polling
NO
B
YES
1402
Already Polling Message Sent for Data Packet #N
YES
NO
1403
Set N14 = 1
1404
Transmit Polling Message to RAP2
Start Timer DT14
1405
Timer Expiration
1406
1407
1408
Report Message in Response to Polling Message received
YES
- Update Counters, Serial Numbers, Variables of MUP Buffer
- Set RAP2_Polling = Serial Number + Polling Period
NO
1409
Set N14 = N14 + 1
1411
NO
N14 > N14_MAX
YES
Send Report on non Reception of a Report Message to MUP Management
1410
A
B

Fig. 15

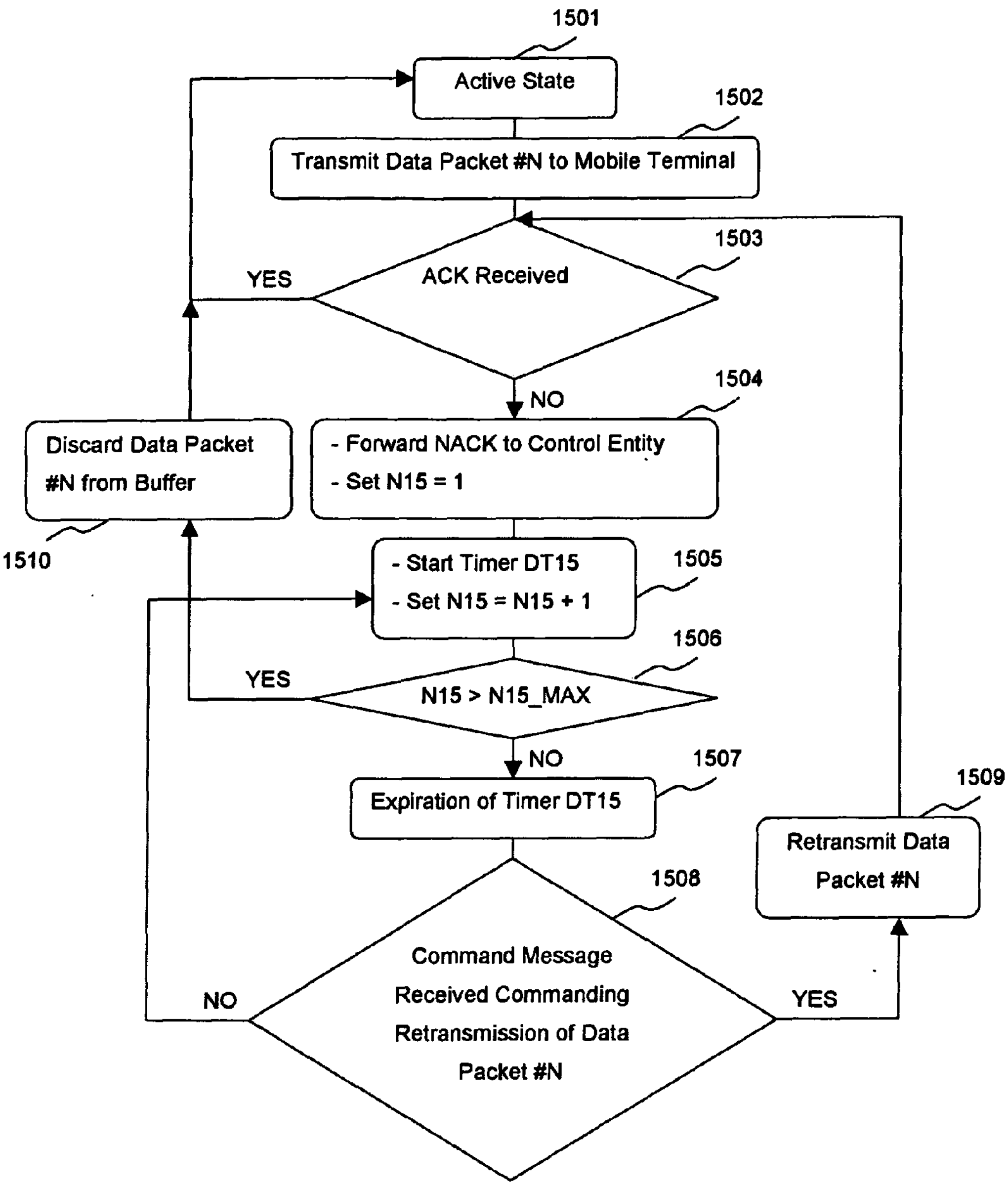
1501
Active State
1502
Transmit Data Packet #N to Mobile Terminal
1503
ACK Received
YES
NO
1504
- Forward NACK to Control Entity
- Set N15 = 1
Discard Data Packet
#N from Buffer
1510
- Start Timer DT15
- Set N15 = N15 + 1
1505
1506
YES
N15 > N15_MAX
NO
1507
Expiration of Timer DT15
1509
Retransmit Data
Packet #N
1508
Command Message
Received Commanding
Retransmission of Data
Packet #N
NO
YES

Fig. 16

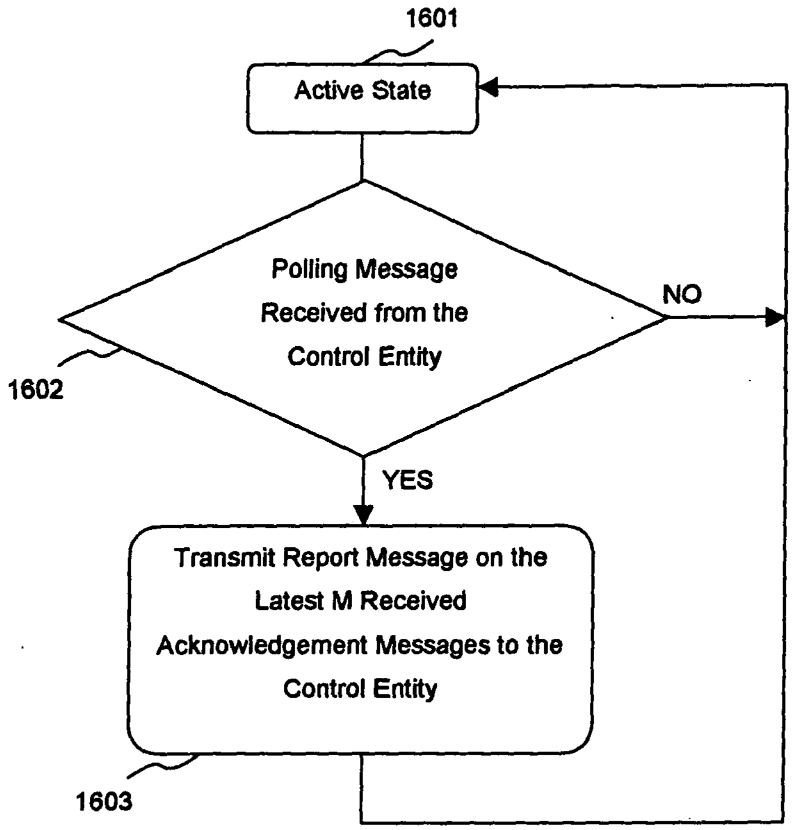
1601
Active State
Polling Message Received from the Control Entity
NO
YES
1602
Transmit Report Message on the Latest M Received Acknowledgement Messages to the Control Entity
1603

European Patent Office

# EUROPEAN SEARCH REPORT

Application Number
EP 06 00 6872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/223478 A1 (FISCHER MICHAEL ANDREW ET AL) 11 November 2004 (2004-11-11)<br>* abstract *<br>* paragraph [0045] - paragraph [0046] *<br>* paragraph [0050] - paragraph [0051] *<br>* paragraph [0064] - paragraph [0066] *<br>* paragraph [0071] - paragraph [0072] * | 1-29 | INV.<br>H04L1/18 |
| A | US 2002/129312 A1 (SIPOLA JUSSI) 12 September 2002 (2002-09-12)<br>* paragraph [0051] * | 1-29 | |
| A | US 2004/160925 A1 (HEO YOUN-HYOUNG ET AL) 19 August 2004 (2004-08-19)<br>* paragraph [0045] * | 1-29 | |
| A | WO 2005/060302 A (TELEFONAKTIEBOLAGET LM ERICSSON ; FURUSKAER, ANDERS; SIMONSSON, ARNE) 30 June 2005 (2005-06-30)<br>* page 3, line 10 - line 15 *<br>* page 4, line 8 - line 25 *<br>* page 10, line 22 - line 25 * | 1-29 | TECHNICAL FIELDS SEARCHED (IPC) |
| | | | H04L |
| A | US 2003/227875 A1 (WEI YONGBIN [US] ET AL) 11 December 2003 (2003-12-11)<br>* paragraphs [0024], [0032], [0036] * | 1-40 | |
| A | US 2005/185632 A1 (DRAVES RICHARD P.JR ET AL) 25 August 2005 (2005-08-25)<br>* paragraph [0057] * | 30-40 | |
| A | US 2004/181569 A1 (ATTAR RASHID AHMED [US] ET AL) 16 September 2004 (2004-09-16)<br>* paragraphs [0039], [0065] * | 30-40 | |

The present search report has been drawn up for all claims

3

| Place of search | Date of completion of the search | Examiner |
|---|---|---|
| Munich | 16 November 2006 | AGUDO CORTADA, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

Application Number
EP 06 00 6872

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

## LACK OF UNITY OF INVENTION SHEET B

Application Number
EP 06 00 6872

The Search Division considers that the present European patent application does not comply with the requirements of unity of invention and relates to several inventions or groups of inventions, namely:

1. claims: 1-29

   ARQ protocol in a network comprising control entities, access points and mobile terminals, wherein several cases in which a retransmission is performed depending on the type of acknowledgment messages received are defined

   ---

2. claims: 30-40

   ARQ protocol in a network comprising control entities, access points and mobile terminals, wherein the mobile terminal indicates an acknowledgment of a packet to a first access point and informs a second access point having a different access technology about the transmission of the acknowledgment to the first access point

   ---

## ANNEX TO THE EUROPEAN SEARCH REPORT ON EUROPEAN PATENT APPLICATION NO. EP 06 00 6872

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2006

| Patent document cited in search report | Publication date | Patent family member(s) | Publication date |
|---|---|---|---|
| US 2004223478 A1 | 11-11-2004 | NONE | |
| US 2002129312 A1 | 12-09-2002 | AU 2425299 A | 18-08-2000 |
| | | BR 9916993 A | 06-11-2001 |
| | | CN 1335002 A | 06-02-2002 |
| | | WO 0045543 A1 | 03-08-2000 |
| | | EP 1145476 A1 | 17-10-2001 |
| | | JP 2002536873 T | 29-10-2002 |
| US 2004160925 A1 | 19-08-2004 | AU 2004200480 A1 | 02-09-2004 |
| | | CA 2457740 A1 | 14-08-2004 |
| | | CN 1534915 A | 06-10-2004 |
| | | DE 102004007198 A1 | 02-09-2004 |
| | | FR 2851402 A1 | 20-08-2004 |
| | | GB 2400277 A | 06-10-2004 |
| | | JP 2004248299 A | 02-09-2004 |
| | | KR 20040073971 A | 21-08-2004 |
| | | RU 2278480 C2 | 20-06-2006 |
| WO 2005060302 A | 30-06-2005 | AU 2003290471 A1 | 05-07-2005 |
| | | EP 1698137 A1 | 06-09-2006 |
| | | EP 1698138 A1 | 06-09-2006 |
| | | WO 2005060209 A1 | 30-06-2005 |
| | | WO 2005060210 A1 | 30-06-2005 |
| US 2003227875 A1 | 11-12-2003 | AU 2003239208 A1 | 22-12-2003 |
| | | BR 0311680 A | 05-04-2005 |
| | | CN 1672354 A | 21-09-2005 |
| | | EP 1512243 A1 | 09-03-2005 |
| | | JP 2005529546 T | 29-09-2005 |
| | | WO 03105394 A1 | 18-12-2003 |
| | | US 2005163161 A1 | 28-07-2005 |
| US 2005185632 A1 | 25-08-2005 | NONE | |
| US 2004181569 A1 | 16-09-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 05027218 A